# EUROPEAN PATENT APPLICATION

(11) **EP 0 760 411 A1**
(43) Date of publication of application: **05.03.1997**
(21) Application number: 96903009.7
(22) Date of filing: 28.02.1996
(51) Int. Cl.: E04H 6/18, E04H 6/20

(54) **MODULAR STORAGE SYSTEM WITH MOVABLE RACK, SPECIALLY APPLICABLE TO MOTOR VEHICLES**

(30) Priority: 28.02.1995 ES 9500393
(71) Applicant: Romero Santiago, Maria Paz, 28026 Madrid (ES); Leon Moyano, Rafael, 28026 Madrid (ES)
(72) Inventor: LEON MOYANO, Rafael, E-28026 Madrid (ES)
(74) Representative: Carpintero Lopez, Francisco
(86) International application number: ES9600040
(87) International publication number: WO9627063

(57) **Abstract**

The tower (3) is transported to the exit or entrance (15) to collect the goods (5) or vehicle (11), the system is divide into two independent areas or modules (2) and the towers are arranged in rows with direct or indirect access to the service lane (27), the towers are transported by a powered trolley (8) along X and Y coordinates via the alternate elevation of two perpendicular series of four wheel tandems, it moves along the rails (7) to a loading bay (14) where it is loaded/unloaded by a mobile lift or truck (10) that is guided by a signal panel (41), or to a stand if the lift is fixed (9) that divides the two modules (2), the load is transferred from the shelf (3) level to the lift (9) and finally to the reception stand (15) by two continuous double chain circuits that haul the sets of slats on which the load is supported which slide over profiles (100) when the chains are set into motion, if the transferal is to take place at 90° this is carried out by series of motorized rollers with alternate mobile rollers (69) at the turnings arranged such as to permit the direction of the vehicle (11) to be changed until this is located in the exit or in the shelf programmed by the computer system, giving the system maximum adaptability and versatility.

## Description

### OBJECT OF THE INVENTION

This invention consists of a modular storage system that can be used for any type of goods, in particular palletized items, that are stored on shelves of different levels, and is particularly suitable for the storage and/or parking of vehicles.

The system is based on a modular distribution of shelves, each of which is assigned a specific location inside the storage area, a suitable point is also chosen, either inside or outside the store, for loading/unloading the goods, to which the shelves will be moved for the reception and unloading of goods after which they return to their original location, the shelves are moved by means of a mobile trolley, that can travel in two perpendicular directions on tracks, or rail network, arranged in a perpendicular grid underneath the shelves, the trolleys are able to move freely underneath the shelves or lift their chassis in order to load and pull the shelves.

### BACKGROUND OF THE INVENTION

In the state of the art, the goods or vehicles are handled automatically after they have been deposited in an access or reception area by the user or driver, this area is suitably equipped for this purpose with electromechanical devices for loading or unloading of goods that will either deposit them inside or collect them from the lift system.

Once the goods are inside the lift, this will be aligned with the level of a shelf or structure placed opposite and the transferal device in the lift will transfer the goods onto the structure or tower.

The shelf on which the goods have been loaded will be moved from the reception area to the storage area by a device that operates completely independently of the shelves, by wheeling them across a rail network, especially designed for this purpose, from the access area to a fixed position in the storage area, the goods that are deposited in these superimposed storage spaces (or shelves) remain in the same place until they are summoned, when this occurs the reverse process takes them to the reception area.

Other Spanish patents that correspond to this type of storage or parking system are patent numbers: 403.493, 429.907, 434.295, 509.698 and 9102167 and the certificate of addition 410.480 corresponding to the first of these patents.

These patents, which belong to the inventor of this application, correspond to similar storage systems that differed from existing systems at the time in the mechanisms, equipment, procedures and control systems used, these resulted in a considerable improvement of the operational and economical results of existing systems and a reduction in the waiting times, a fundamental aspect of parking or vehicle storage systems.

In the above mentioned previous patents, with respect to the electromechanical device used for the transfer or loading and unloading of the goods, that from here on will be referred to as loads, specific mechanisms designed for loading-unloading or the transfer of automobiles, are presented.

More specifically, one solution used an automotive system called a trolley, located in the lift that would pick up the load on series of separate rungs at the deposit/collection points in both the reception area and the towers using other rungs, denominated forks, with an elevation system that collected the load on the forks and transferred the load using driving wheels, this was improved in more recent patents by reducing the weight and collecting the vehicles on smooth surfaces using two sets of mobile forks instead of the fixed forks previously used.

For each request to deposit or collect a vehicle, transferal of the load and its elevation result in accumulative waiting times for each lift or transfer (in contrast to the transferal times of the shelves or towers). Previous solutions, therefore, in spite of their improvements, still resulted in excessive operation times, since these pushing or transfer devices using fixed or mobile forks, had to travel twice the distance, once to travel to where the load must be collected and another reverse journey to place the load in the correct place. Also, these could only be operated on one side of the lift, restricting use of the other side and resulting in an increase in the blocking of the lift.

With respect to the automated system for transfer of the shelves, on which the loads are stored in levels on top of each other, the design described in the aforementioned patents of this system that originally used chain traction was improved in more recent patents by replacing this mechanism with a motorized platform called a powered trolley with four bogies or rotating tandems and in later patents by a powered trolley with a double chassis each fitted with four oscillating tandems. The most recent models use the single chassis with four rotating tandems each with special motor sets.

Therefore, in the storage systems referred to previously and described in the previously cited patents, each storage area is comprised of shelves or a tower, a metallic structure that can be transported by means of a powered trolley that travels over a rail network, this device moves underneath the shelves or tower raises slightly in order to take the weight of the shelves, and then transfers the shelves, together with their load, either from the loading-unloading area to the assigned storage area or parking space, or, from this storage area to the reception area which in the mobile lift system usually coincides with the area in which the goods that arrive at or leave the store are loaded/unloaded, and in our system is the only working area or goods handling area, in this reception area, the goods are deposited or collected on palettes, from the different heights or shelf levels of the tower by a fork lift truck with a steering device that assists the driver to align the truck with the shelf.

### DESCRIPTION OF THE INVENTION

The aim of this invention is to improve on previous automated goods storage or parking systems in garages and/or car parks of the kinds previously described by modifying the system or procedure used, such as the use of a mobile lift with loading/unloading device outside the storage area by a commercial element such as the fork lift truck, the new position of the fixed lift and the new lay out of the module, result in simplification of the manoeuvres and increased safety and speed, especially compared to the fixed lift system of previous patents, it also uses faster and safer transferal equipment or equipment for loading or unloading goods or vehicles, suitable for multi-purpose application and far superior to the modulation or transferal systems patented previously by the owner of this present application.

The goods, if possible in palletized form, are stored on sets of shelves that are arranged in independent groups or modules within the store, in these modules the towers are arranged in direct and indirect rows on either side of a service or access lane that leads to one of the store's exits, at the exit the loading/unloading bay corresponding to that module is located. The store is comprised of a number of modules each assigned its own set of coordinates, the movement of the sets of shelves or towers are independent from one module to the next, if possible each system will be comprised of a minimum of two or four modules, the latter in fixed lift systems and the movement of the towers will be controlled, preferentially, by a compatible computer, the modules are determined by a number of sets of shelves or towers that occupy the spaces inside the store which will be arranged in two direct rows adjacent to a service or access lane and turnings, with this design the space can be used optimally since one or more indirect rows of towers can be situated behind the front direct rows, since the towers are mobile towers from the direct row can be temporarily moved to the service lane in order to gain access to the towers behind.

The mobile shelves or towers are metallic structures, the dimensions of which are chosen to suit the characteristics and weight of the unit load specific to each store and the number of units or spaces in each level of the shelves or tower and the dimensions of the tower must be such that the powered trolley for the transfer operation can fit underneath the shelves between its vertical supports, the size of the shelves or towers will be limited by their stability and by the maximum height reached by the fork lift truck but where possible will be between one and eight levels high and store approximately four palettes or one vehicle per level. If more than one unit load is to be stored on one shelf level, eg. with paletted goods, preferentially four palettes are stored per level or shelf, the level is divided into the spaces in which a unit load can be stored.

In order to make the identification, management and control of the movement of each load stored on the mobile shelf units or towers in each module simpler, each space is assigned a grid reference with X and Y coordinates in addition to a reference to the shelf level or height, the position of the goods in each module can, therefore, be precisely determined by a system of (x,y,z) coordinates, the goods loading/unloading bay in each module is situated at the origin (0,0) of these axes. In the fixed lift system the origin of coordinates, X = 0 and Y = 0, will be located in front of the fixed lift. In both systems, along the service lanes and turnings, all the turnings are situated along the X=0 axis. The service lanes coincide with the X axis, moving away from the lift the positive X direction is when the wheels move in a clockwise direction away from the origin (0,0), for the Y coordinates the positive direction of the Y axis is to the right of the lift, or the X axis, and the negative direction is in the opposite direction to the positive, no fixed grid reference is assigned to the shelves on the indirect rows in each module which all have the same X coordinate and the same sign Y coordinate.

The service lane and turnings are in direct contact with the loading bay or access area and loading/unloading area of the shelves which is situated at one of the ends of the service lane, outside the shelf parking or storage area. In the fixed lift system, loading and unloading of the goods from the shelf takes place inside the store at the grid reference corresponding to the turning in front of the fixed lift that separates the two adjacent modules that are aligned along the OX axis, each module has an independent device for transporting the shelves called a powered trolley.

In the fixed lift system, the powered trolley with or without tower or shelf can move from one module to the next along two, preferably aligned, service lanes which are separated by the elevator pit which must be of sufficient depth and dimensions for the upper level of the lift platform to be lowered to ground level and for the two rails for the powered trolley on the lift floor to be perfectly aligned with the rails that form the service lanes of each module.

An a location signal panel in each position of the loading bay or vehicle stand will indicate to the driver of the fork lift truck, the level and position that has been assigned to the load on the truck that must be deposited or the load that must be collected by the truck depending on whether this is a loading or unloading operation of the tower in the store loading bay.

To assist the driver in aligning the truck with the tower deposited in the loading bay by the powered trolley, the operator of the truck is guided by coloured bands painted on the floor, parallel to the horizontal side arms of the shelf in the loading bay and perpendicular to the direction of forward movement of the truck, the shelves can, therefore, be guided by aligning these bands with a coloured bar, located, preferentially, on the bottom of the truck, the driver must have a clear view of the two ends of these bands which assist the driver in aligning his approach to the shelves which is also aided by other bands of paint, preferentially on the floor, distinguished by their colour and numbered with the position of the corresponding level, orientated perpendicularly to the previously described bands and at a certain distance that permits the driver to follow the correct line, preferably through sights or a guide bar assisting him to move the truck along the axis on which the goods are situated on the shelf level in the bay and indicated by the panel, to do this these lines are distinguished and numbered with the number corresponding to the lateral position or positions on the shelf, usually two. Bands of paint or a non-magnetic bar code on the horizontal side members of each shelf level are identified by the reader unit of the automatic alignment system that, preferentially, the truck is equipped with.

The manual alignment and goods placement system of the fork lift truck can be optionally complemented with an automatic system situated in the upper part of the driver's cabin of the truck, this uses a chassis that is wider than the load, with a, preferably photoelectric, measuring device on each end, the range must exceed the size of the goods in the direction of movement of the truck, these measuring devices are vertically aligned with one of the shelf's horizontal side members, resulting in a double action, the first due to manoeuvres of the truck that position it opposite and align it with the shelf indicated by the indicator panel of the loading bay, by following the guide lines marked on the floor that aid to align it with the paint marking or corresponding reflector, located on one of the shelf's side members at the appropriate height, that closes the circuit and switches on the indicator situated on the switchboard in the truck cabin visible to the driver, the second action consists in manoeuvring the truck until the reader-measuring devices detect two marks along the length of the shelf, each measurement is recorded on a distance electronic indicator that informs the driver of the divergence between the truck and the shelf in the store loading bay, when both indicators record the same distance the automatic shut-down is activated which, in turn, activates a light and sound signal on the control panel that informs the driver that he can now begin lifting the truck forks which are controlled by a control panel in the driver's cabin of the truck which is fitted with a switchboard and controls to regulate the shelf height which, in turn, is connected to end of strokes situated at distances corresponding to the different shelf levels, along the telescopic elements of the fork arm of the trucks. When the driver presses on the control panel the switch corresponding to the level recorded on the loading bay panel, the normal operation or manual control of the truck is disconnected and the automatic mode is activated which results in the automatic elevation of the load, once this has been lifted to the correct level, indicated by the illumination of a light on the switch board, the driver moves the truck forwards placing the forks in contact with the load in the position indicated by the control panel, as the truck moves, the reading on the control panel will decrease until it reaches a predetermined minimum distance which will block the forwards movement of the truck, when the pilot light on the control panel is illuminated this indicates to the driver that the forks, with or without a load, are in position, and the truck is brought to a stop and deposits or collects the load, it then moves backwards removing the forks, with or without their load, from their position on the shelf, indicated on the control panel, which is followed by a lowering of the truck fork arm followed by its unrestricted movement to either unload or to carry out a new loading or unloading operation on the same or a different tower.

The powered trolley is comprised of a double rectangular chassis made up of two rectangular chassis of parallel profiles joined by couplings and reinforcements, giving the powered trolley a minimum height combined with optimum support and centring of the loads, presenting in each of the four vertices between the two profiles of the chassis two tandems situated at right angles, amounting to a total of four, one on each corner of the trolley, for movement along the X axis, and another four for movement along the Y axis, with a lifting-lowering device attached at one end to the chassis and at the other end to a tandem pivoting shaft in the same direction as the movement of the trolley wheels, with each end of the pivoting shaft resting on the chassis, the four lifting cylinders of the shelf are built in to the four corners or vertices of the double chassis, above the level of the wheel shafts so as to permit the action of the driving wheel of each tandem which is the farthest of the two wheels from the vertex of the chassis or the corresponding lifting cylinder, and the driving wheel is, if possible, operated by independent engines for each tandem or by centralized engines, with an articulated joint to absorb both the movement of the tandem where this pivots on the shaft and the lifting-lowering movement of the hydraulic cylinder or actuator used to change the tandem on the track, this joint is coupled at the other end by a return output or reducer that can optionally present the output in line with the input, with no change in ratio and the other output at 90° with or without a reduction in the ratio, with this mechanism the speed of the process can be modified according to the direction of the movement, whether this be in an X or Y direction, in all models the two tandems are joined at 90° by two return outputs and its input shaft is coupled to one of the two reducer outputs of the motor set, located in the centre of the chassis in line with the driving wheel shaft and the input shaft to the corresponding return, which is mounted on a bridge support and is in a similar position with respect to the central motor set, that drives two tandem pairs, this assembly is repeated in the four other tandems on the opposite side of the trolley, resulting in a single motor set for each pair of double tandems on each side that form the two vertices of the chassis, changes in the direction of the trajectory of the powered trolley, in both models, take place at the service lanes and turnings assigned a grid reference corresponding to a crossroads or turning and is achieved by exchanging the sets of wheels by lifting-lowering the tandems by activating the hydraulic lifting cylinders, activation of this circuit blocks the lifting of the four tandems of the same direction situated in the four vertices of the chassis, while the cylinders or lowering actuators of the other tandems positioned at 90° to the aforementioned ones do not arrive at the end of their trajectory on the rails, the special feature of this trolley is that it permits rolling movement in two perpendicular directions.

Another special feature of this trolley is that during changes in the direction of movement it only bears the weight of the corresponding wheel tandem and does not rest the load from the shelf on the floor of the store. The trolley is introduced beneath the shelf and is then raised to a height sufficient to separate the four vertical supports of the shelf from the floor, to permit its transport along the tracks.

If possible, the tandem wheels should be steered laterally along a central channel that divides the two support and rolling zones, if possible these should be made of a synthetic material suitable for rolling on metal tracks which should be comprised of a special metal profile formed by a strip wider than the wheel in order to enable this to be in contact with the floor and with a central ridge of circular cross-section for the lateral steering of the wheels, these tracks or rails have an uninterrupted rolling surface along their entire length and the central guiding ridge is absent at the crossroads or turnings in order to permit the change of direction of the wheels.

With respect to the fixed lift, the lift and the levels of the structures will be fitted with mechanical devices that enable, once the level of the platform has been aligned with the level of the structure that stores the loads or vehicles, the lifting or collection of the load from this level to the level of the fixed lift system, and, particularly in the model used for vehicle parking, the signal panel will inform the driver of the vehicle entering, the vehicle stand of his vehicle, the shelf and the level in which his vehicle is parked, in both cases, once the demand for the shelf situated in the origin of the grid has been carried out, the light on the panel of its corresponding stand will be switched off, and the automatic control of the powered trolley of the corresponding module will be activated, usually, in this type of operation, the load or vehicle is transferred from the vehicle stand to the lift platform by transfer devices situated in each of the stand positions, preferentially there should be two sets of one or several stands at each opposite side of the lift, in other cases it is even possible to occupy three and even four sides of the lift, preferentially these transferal devices are comprised of two parallel continuous transport belts of separate slats, and an upper limit to the intermediate level that guarantees that the load only rests on the belts, the upper part of each belt or circuit or loaded section, if possible supports a series of slats or fixed idler rollers, that in both models directly bear the weight of the load or container or, in the application for vehicles, directly support the weight of the vehicles' wheels, the transport belts are driven by a driving drum and a tensor drum and the two parallel series of chain belts are operated by an electric gear motor built into the floor of the stand, a series of rungs on the sides of both belts protrude from the support surfaces that comprise the upper part of the continuous belts in its trajectory over the slats or fixed rollers or the loaded section, these rungs can be modified according to the type of load to be transported, e.g. for the transport of vehicles these rungs will have to guide and align the load with the corresponding transferal system of crossing and transportation belts in the lift or vertical transfer system. This transferal system can also be used in combination with the crossing and transportation belt system used in the fixed lift system. If the lift has two perpendicular entrances, transferal of the load or vehicle from the vehicle stand onto the lift platform and from the latter to the shelf level using the transferal system of the corresponding shelf or from this shelf level to the lift, can be carried out by the system of crossing belts of the platform in combined movement with the transferal system of the level of the corresponding tower, the system of crossing and transportation belts of the platform is comprised of two series of three transport belts of different lengths, with continuous rubber bands, made of metallic fabric or slats similar to those used on the vehicle stands and on the tower levels, each of the two series operates for both of the directions of transport possible, "X" or "Y", which are perpendicular to each other, of the three belts in each series, one is used to cover the central section between the crossroads and the other two are used to cover the section from the two crossroads to the two ends of the platform, these belts are aligned so as to be able to transfer the loads to the corresponding section of the belts on the platform or to the transfer system of the corresponding level of the tower; the crossroads section provides continuity between the two nearest belts of each series and is constituted of a roller device or cross area, situated in the four crossing areas of the two series of belts and chains, one special feature is that each cross device has a series of shafts on which a number of short rollers are mounted which provide continuity with the idler rollers or slats in the adjacent belts of the "X" and "Y" series. This series of shafts with rollers are situated in the crossing areas and their shafts pass through the spaces between the rollers of the other series, each roller has an independent spin axis perpendicular to the previous axis and these rollers fit between the former rollers that are preferably of the same size. Preferably each roller receives its turning movement from a lower roller for which the surface of each roller is rough and grooved, these grooves may or may not be interlocking, which assures that when the lower roller rotates the upper roller also rotates, each shaft of the upper roller is independent and rests, like the lower roller, on a "U"-shaped support where the pairs of rollers are situated. The lower roller is fixed to the shaft which is the same for all the lower rollers coinciding with this shaft, this shaft, therefore, crosses the independent "U" supports each with its two rollers which are inserted between the former rollers that rotate at an angle of 90° to the two support rollers during the lifting-lowering process, since these supports are joined to a back plate, which is the upper plate of the lift mechanism, if possible of spindle driven type, like the shafts of the two series of rollers, the four spindles of the four crossing areas are, if possible, centrally driven, to obtain this situation, all the first shafts are joined by the pulleys at the ends of the first shafts or motor roller to one of the two chain transmission circuits of the rollers, each circuit is driven by a chain pulley or pinion at one of the two reducer outputs of the motor set. Analogously, on the ends of all the second shafts that drive the mobile lower wheels, there is a chain pulley or pinion that receives the movement of one of the continuous circuits of driving chain of mobile rollers that, together with the other parallel circuit, are driven by two driving pulleys or pinions which are joined by a cardan type elastic transmission or some similar device that permits changes in the alignment or the position of the pulley shaft to be corrected. This disalignment occurs during the lowering-lifting process of the rollers on the support produced by driving of the mobile rollers by the lift mechanism that are connected to the two outputs of the motor reducer, if possible situated below the surface of the lift platform. Analogously, the spindle articulated transmission of the lift mechanism are activated at the four crossing areas, that are, if possible, interconnected, to one of the two continuous chain circuits by means of a pinion situated on the shaft of each spindle of the lift mechanism, in each circuit there is another pinion that is connected by elastic transmission, through which it receives the action and permits the lifting movement and movement of the spindle shafts. These, in turn, are joined to the other end of the connection or elastic transmission to one of the output shafts of the reducer of the motor set situated below the lift platform.

With these transferal devices, one can collect or deposit the goods on the lift platform at any one of the four sides, these may be loads or vehicles from the different levels moved with the transferal systems of the structures, or from the four positions of the stands for the reception and alignment of the goods or vehicles adjacent to the positioning or reception stands with which these are conveniently aligned. The transferal system to be located inside the fixed lift can be used instead of, or in combination with, the transport belts situated in the vehicle positioning stand.

The device for transferring the load or vehicle in the shelves, that is activated when the shelf is opposite the fixed lift, is in one of the two sets of shelves from the lift of the two corresponding modules, one of which is situated at the origin of coordinates of the corresponding module, of the two modules possible, one per module, and the other shelves are the fixed tower of the module that is situated outside the system of coordinates of the module. For the loads or vehicles in the fixed towers, if possible these will act as fixed, immobile towers or shelves and will follow a different sequence of operations to those situated at the origin of the system of coordinates in each module, in this case the loads or spaces in the fixed towers at the sides of the lift are accessible preferably via the activation of the transferal system inside the lift as an operation of lateral transferal or along the width of the tower, and for the indirect spaces by the combined operation of both transferal systems, following transferal of the space from the direct to the indirect level summoned, situated in the direct fixed tower. These towers, situated either to the front or to the side of the lift according to the type of model used, are not mobile except when they must be removed in cases of breakdown or to be transferred to another module.

A double system is also used for the transfer from the lift platform to the aligned level of the shelf, i.e. this transfer takes places in both directions by a device situated below the lift platform, comprised of a motor reducer with gradual start-coupling that operates on an adjustable track arm which can be shortened or lengthened, on its end there is a crown wheel that transmits the turning movement to a coupling flange situated on the shelf opposite the lift, that, previously pushes down a lever that releases the locking pawl on the tower level facing or opposite the lift, that, before the transferal device is activated is pushed by the track arm on the lift platform which unlocks the coupling flange situated in front in the centre of the horizontal frame side members, since this engages the crown wheel on the end of the track arm it receives the turning movement produced by a motor set situated on the lift platform, which, since the wheel is continuous with the central part of a shaft that rests on extensions or brackets with gusseted joints situated at the ends of two of the 4 "double T type" profiles, both of which are located in the central part of the level, transmits the turning movement to a chain wheel situated at each end of the shaft, each of these acts on a closed or continuous circuit, both of which are symmetrical, of steel-link chain carriers, preferentially chain carrier rolls and each circuit is situated on the shaft of the load supports in the horizontal plane, at a height such that the loaded section of chain and the empty section, of which each closed circuit is comprised, pass close to the upper and lower faces, respectively, of the profile of the horizontal side arm, for this to occur, in addition to the traction wheel, at the other end of the circuit that corresponds with the trajectory required for the transfer, there is another similar inverter wheel, if possible with a chain take-up device, the chain of each circuit is continuous, fixed and moves transversally to the movement of the series of slat chains, each slat is fixed to a support link and is orientated parallel to each of the chain circuits, the slat width being such that these can pass through the turning radius of the driving wheels or pinions, these are arranged on each of the chain links or on alternate ones depending on whether it is a treadable area such as the vehicle reception stands or a non-treadable area such as the lift or tower, in all three cases the underneath of the slats slide over fixed profiles parallel to the chain circuits, and, therefore, perpendicular to the slats in pairs or threes so as to be able to bear the load transmitted to them by the slats as these slide over its upper surface, the ends of the driving pinion are curved so as to facilitate the descent of the slats on their way through the pinion there are, therefore, two continuous belts of parallel slats that transfer the load over the upper section to an upper limit to the intermediate floor and that directly bear the weight of the vehicle's wheels, the slat transport belts are driven by a tensor drum and a driving drum and, preferentially, the two parallel series of belts are driven by an electric gear motor, preferentially fixed in the floor of the vehicle reception stand or in the lift platform, the transferal system in each shelf level or tower differs from that used for the reception stand or lift in that the former is driven from the platform and the slats over the two double sets of chains comprise four groups or frames each comprised of six or eight slats situated under the sections that support the vehicle wheels, the group of slats or frame is continuous with the corresponding continuous circuit and when the two chain circuits are activated the first frame or that nearest the drive shaft will move across part of the loaded section or upper part of the circuit towards the exit of the level or from the drive shaft until it reaches the lower or empty section of the circuit, the distance this moves will be such that the rung of the second frame of the circuit or the one furthest away from the driving shaft is situated above the driving wheel of the chain, i.e. the final position of the second frame, at this moment, the first rung of the second frame activates an end of stroke, that is, preferentially, situated in the drive shaft in the lift platform causing the contactor to stop and reverse the turning direction of the motor set. Control of the reverse trajectory, or towards the inside of the level is carried out by measuring the chain pitch by the crown wheel in order that these measurements coincide with that recorded for the load entering, and/or by stops or actuators situated in the lower section or empty section of the circuit chain that activate an end of stroke as these pass through the driving flange shaft. The shape and type of frames or support strips of the loads and the frame rungs or rollers that these are comprised of, vary in accordance with the load these must support, therefore, in the application of this system for car parking, in which the load is a vehicle, the two circuit frames must be different, the two second frames of each circuit are made up of two separate rungs or rollers between which a wheel arch fits that guarantee the immobility of the vehicle, the first two wheels that enter the transferal system are fixed between two rungs or rollers, these can be either the two front wheels or the back wheels depending on whether the shelves or tower situated in front of the lift are in a frontal position, coinciding with the Y axis of the grid, or on the contrary, if the orientation of the structure and, therefore, its transfer system and the position of its side arm is lateral or in a "X" position on the grid it receives the position from each circuit one front wheel and one back wheel, thus in the frontal transfer of the vehicle, the correct positioning is guaranteed regardless of whether or not the second pair of wheels has been secured. The second frame is longer so that this can be adjusted in order to correctly cover all the possible positions of the second pair of wheels taking into consideration the different distances between the wheel axes of different vehicles.

### DESCRIPTION OF THE DRAWINGS

To complement the written description and in order to clarify the characteristics of this invention, the following descriptive report is accompanied by a detailed set of illustrative diagrams which represent the following:
Figure 1.- Shows an overhead view of the plant from the warehouse or "store" of the mobile lift model, it shows several sets of shelves and the loading bay where a tower is being unloaded by a fork lift truck, and the rail network along which the powered trolley moves, which is introduced below the direct tower in order to transfer the latter to the loading bay.
Figure 2.- This shows a lateral view of the plant shown in Figure 1.
Figure 3.- This gives a diagrammatic representation of an overhead view of different models of modular distribution, of the mobile lift or truck model, in which the powered trolley of the first module is in the loading bay, and in the second module is collecting an indirect tower.
Figure 4.- A diagrammatic overhead view of a model for vehicle parking.
Figure 5.- Diagrammatical representation of the electrical system of centralization and alignment of the fork lift truck with the shelves or tower.
Figure 6.- Shows the control panel for manoeuvring the arm of the fork lift truck.
Figure 7.- Overhead view of the manoeuvres of the fork lift truck to align itself with the loaded tower.
Figure 8.- A lateral cross-sectional view of the loading-unloading bay in the car park model with the modulation system shown in Figure 4.
Figure 9.- Overhead diagrammatic representation of several modular distribution systems showing the two modules corresponding to each fixed lift (distinguished by a striped pattern), and the model that uses the lateral passage of vehicles, and transferal of the tower in the service lane along the width of the vehicle in the store.
Figure 10. - Similar examples to the previous figure with movement of the tower in the service lanes along the width of the vehicle in the store (1).

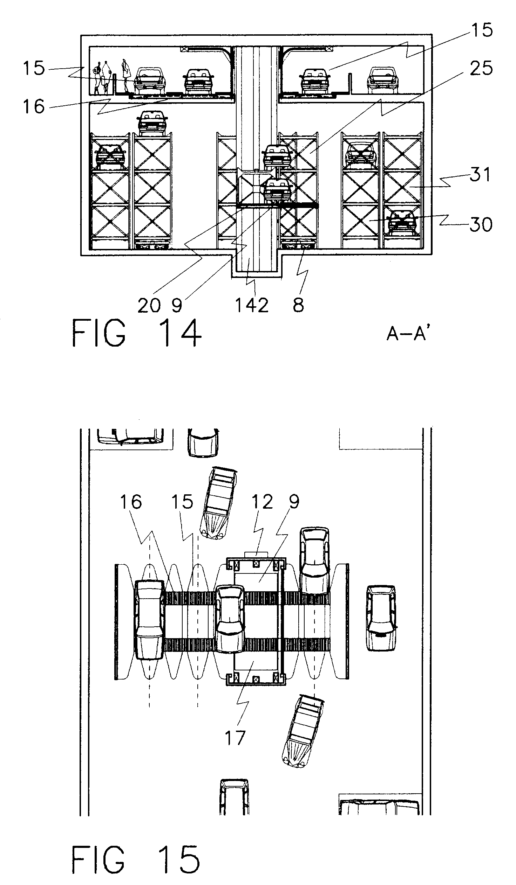

Figure 12.-Diagrammatic overhead representations of different examples of the vehicle stand area or the entrance/exit area of the store of modular distribution, of the fixed lift solution with a double transferal system, cross transferal system or the simple single vehicle transverse transferal system, figures 14 to 16, or the longitudinal transferal system in figure 10.
Figure 13.- Profile of the different possible positions for the silo with respect to ground level.
Figure 14.- Cross-section of Figure 16 along the A-A' axis, where the double level lift is repeated, showing the simultaneous transferal of two vehicles from the lift to the tower or vice versa.
Figure 15.- Shows the level corresponding to the vehicle reception area of the store of Figures 14 and 16.
Figure 16.- An overhead view of a type V fixed lift system or the underground system of Figure 13, with transverse transferal systems and longitudinal movement of towers or along the "X" coordinates according to the modulation shown in figure 9 of the "store", showing a number of towers including an indirect tower in the area in front of the lift corresponding to the origin of coordinates, and the rails along which the powered trolley moves and the trolley in the other module being introduced underneath a tower in order to transfer it to a position opposite the lift.

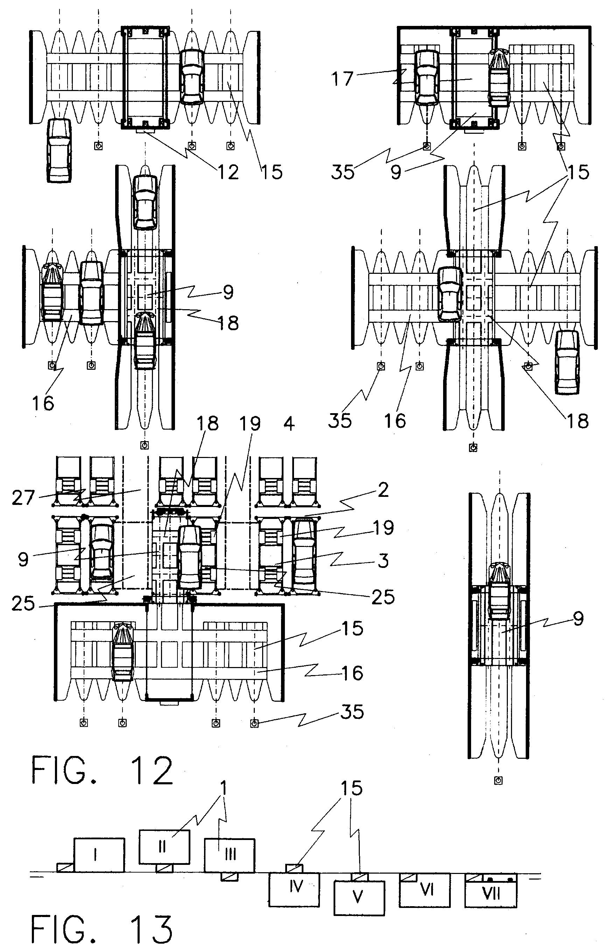

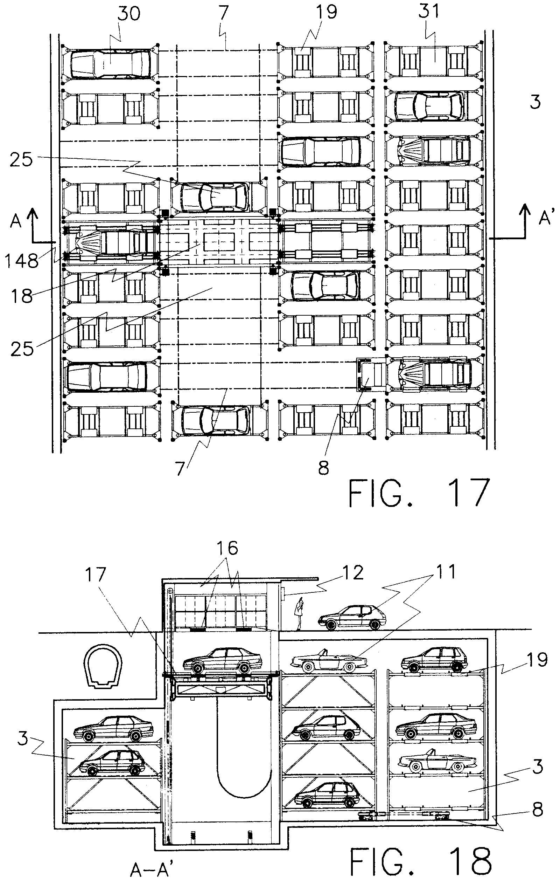

Figure 17.- This shows an overhead view of the two modules of a fixed lift system with cross transferal systems, application for movement of vehicles, and transverse movement of towers with a frontal transferal of vehicles to the tower in towers adjacent to the lift, and transverse transferal in the remaining towers, this can be considered as a part of the store with the same modulation as that shown in figure 10, with a number of "sets of shelves", and the powered trolley of one module being introduced underneath an indirect tower and the trolley of the other module situated opposite the lift.
Figure 18.-This shows a cross-sectional view of Figure 17 along the A-A' axis, with a view of the reception stands, with canopy or roof, or type IV of figure 13 in a model with two levels for underground transferal along service lanes, for example.
Figure 19.-Overhead views of the crossing areas area or vehicle transferal area in the fixed lift or reception stand.

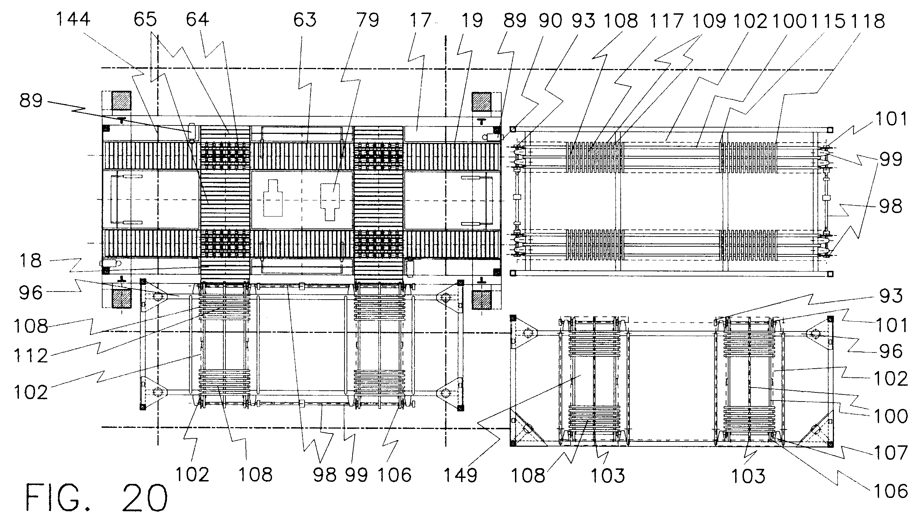

Figure 20.- Overhead detailed view of the cross-transferal system in the fixed lift, in the vehicle parking model, with the modularity shown in figure 10 of the mobile towers with transverse transferal of vehicles, with fixed towers adjacent to the lift with frontal transferal system.
Figure 21.- A longitudinal cross-sectional view showing the transferal system at the level of the shelf, and the different positions of the frames, with longitudinal transferal of the vehicle with the modularity represented in figure 11 or figure 19, with the lift fitted with a cross system.
Figure 22.- A cross-sectional lateral view of the transfer of the vehicle from the level of the towers in each of the two modules that have access to the double platform lift, transverse transferal to the lift with a crossed transferal system on the lower platform and a simple transferal system on the upper platform, or on the contrary, transferal from the lift to the tower.

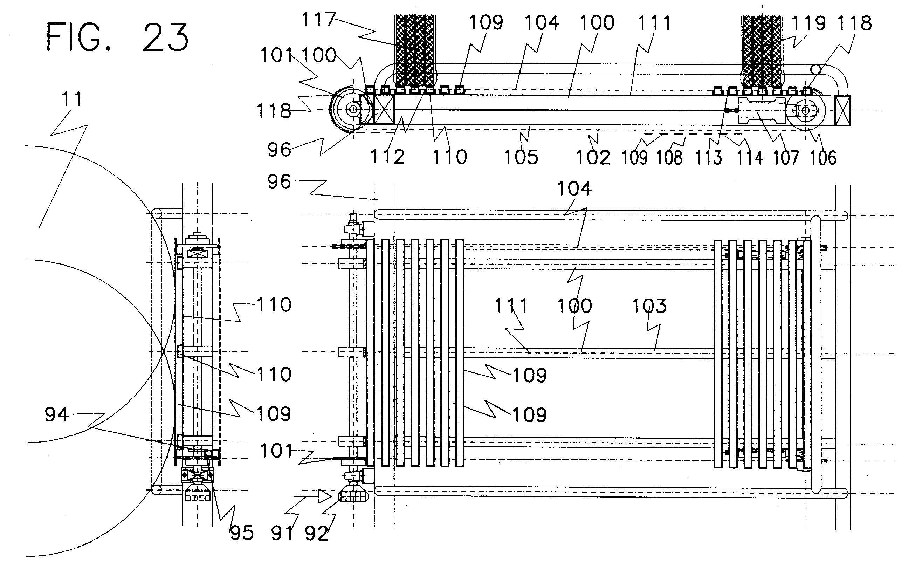

Figure 23.- A detailed view of the driving system of the transverse transferal or transport system of the vehicle in the level of the shelf or tower, by chain circuits that pull sets of slats supported on tower profiles, driven from the lift platform.
Figure 24.-Overhead view of the powered trolley at the crossing areas or turnings for its introduction beneath a tower loaded with paletted goods, centrally driven.
Figure 25.- A lateral profile of figure 24.
Figure 26.- A lateral and overhead view of the powered trolley with transferal of the tower in the vehicle parking model and independently driven tandems.

### LIST OF THE NUMBERED PARTS APPEARING IN THE DRAWINGS ACCORDING TO THEIR NUMERICAL LABEL

1.- Storage area for the shelves or towers.
2.- Modules into which the storage area is divided = area of operation of powered trolley.
3.- Shelves or towers loaded with goods or vehicles in superimposed levels.
4.- Storage space or level of shelf or tower.
5.- Goods, loads or products.
6.- Shelf level fitted with transferal device.
7.- Rail network for rolling trolley.
8.- Driving trolley (D.T.) or powered trolley (P.M.).
9.- Fixed lift with transferal device.
10.- Fork lift truck or mobile lifting system (commercial).
11.- Vehicle.
12.- Location signal panel.
13.- Control computer.
14.- Loading bay and origin of coordinates.
15 - Vehicle positioning stand.
16.- Continuous slat transport belts on vehicle stand.
17.- Fixed lift platform.
18.- Crossing and transportation belts for the lift platform.
19.- Slat conveyor belts at shelf level.
20.- Driving device for the tower belts.
21.- Batteries (D.C.).
22.- P.T. cylinders that support the shelves.
23.- Second loading bay positions.
24.- Grid reference (GR) in the store.
25.- Grid reference of crossing areas opposite the fixed lift and origin of coordinates.
26.- Wheel tandems of D.T. or P.T.
27.- Service lanes and turnings ("X" movement).
28.- Transport vehicle.
29.- Demands for nearby storage.
30.- Direct row of shelves or towers.
31.- Indirect row of shelves or towers.
32.- Grid reference showing changes in the positions of the shelves.
33.-
34.- Position on shelf level.
35.- Free-occupied indicator on platform.
36.- Bands of paint.
37.- Horizontal side arm of the shelf.
38.- Forward movement of truck.
39.- Guide bar.
40.- Ends the guide bar.
41.- Numbered lines.
42.- Frame of alignment system.
43.- Distance measuring device.
44.- Length of goods.
45.- Reading point
46.- Closure of reading circuit with illumination of 47.
47.- Reading indicator.
48.- Control panel for automatic centring and positioning system.
49.- Distance electronic indicator.
50.- Closed circuit indicating alignment.
51.- Light-sound indicator of alignment.
52.- Truck's fork or lifting arm.
53.- Minimum distance of truck approach.
54.- Blockage-opening of circuit of forward movement.
55.- Pilot indictor of minimum distance or forks inwards.
56.- Fork arm frame.
57.- Switch board and control panel for lifting arm frame.
58.- End of stroke in fork arm frame.
59.- Pilot indicator of fork in level.
60.- Closed circuit of fork in level.
61.- Fixed idler rollers.
62.- Motor-reductor set of driving drum.
63.- Central driving belt of lift.
64.- Roller or crossing areas.
65.- Lateral transport belt of lift.
66.- Driving shaft of rollers.
67.- Driving roller.
68.-
69.- Upper mobile roller.
70.- Shaft of upper mobile roller.
71.- "U" support of mobile rollers.
72.- Shaft of lower mobile rollers.
73.- Support plate for operating the elevation of mobile rollers.
74.- Lifting mechanism of mobile rollers.
75.- Elevating device spindle
76.- Chain pulley or pinion.
77.- Driving chain circuit of rollers.
78.- Roller driving pulley or pinion.
79.- Roller driving motor set.
80.- Shaft pinion of lower mobile rollers.
81.- Driving chain circuit of mobile rollers.
82.- Driving pinions.
83.- Articulated transmission.
84.- Motor set for driving the mobile roll shafts.
85.- Driving chain circuit for roller lifting mechanisms.
86.- Spindle pinion.
87.- Spindle articulated transmission.
88.- Motor-set for lifting mechanisms.
89.- Motor-set for transferal system in the tower level.
90.- Coupling with gradual start.
91.- Track arm
92.- Crown wheel
93.- Driving plate
94.- Locking pawl.
95.- Breech block with spring actuator.
96.- Horizontal side arm of the side of the tower facing the lift.
97.- Tower support or vertical profile.
98.- Shaft of driving plate.
99.- Support gusset of wheel shaft.
100.- Profile for support and guiding of load.
101.- Driving wheel for chain.
102.- Continuous chain circuit.
103.- Shaft for support of load in level.
104.- Upper section or loaded section of circuit chain.
105.- Lower or empty section of circuit chain.
106.- Chain wheel.
107. - Chain take-up device.
108.- Frame or set of support slats for load.
109.- Rung or slat.
110.- Sliding support of support slat.
111.- Upper surface of the profile, brand 100.
112.- First frame or group, nearer to the driving shaft, 98.
113.- Second frame or group, further from the driving shaft, 90.
114.- Limiting position of the second frame.
115.- First rung or slat of the second frame.
116.- End of stroke of operational shut-down.
117.- Vehicle wheel.
118.- Last rung or slat of the second frame.
119.- Second wheel of the vehicle to go through the system.
120. - Double chassis of powered trolley.
121.- Parasitic current inhibitor.
122.- P.T. tandem for movement along the X axis.
123.- P.T. tandem for movement along the Y axis.
124.- P.T. tandem wheel.
125.- Actuator or lifting-lowering cylinder of tandem.
126- Pivoting shaft of P.T. wheel tandem.
127.- Driving wheel of tandem.
128.- Articulated joint.
129.- Perpendicular return.
130.- Return outlet.
131.- Shaft of return inlet.
132.- Coupling between shafts.
133.- Central reductor outlet.
134.- Central reductor.
135.- Motor set.
136.- Hydraulic set of the P.T.
137.- Grid reference of the turnings of the P.T.
138.- Hydraulic set of the P.T.
139.- Floor of store.
140.- Support or leg of tower.
141.- Symmetrical ratio shaft in vertex of the P.T.
142.- Fixed lift pit.
143.- Upper level of the fixed lift platform.
144.- Rails for the P.T. on the platform of fixed lift.
145.- Horizontal support profile in the load positions on the tower level.
146.- Reaction plate of the cylinder in the tower.
147.- Gusseted joint.
148.- Fixed tower distant from fixed lift or with grid reference outside the system of coordinates.
149.- Transferal device along the width of the tower shelf.

### PREFERRED EMBODIMENT OF THE INVENTION

On examination of the diagrams it is clear that this system can be applied to the storage of goods and is particularly effective for vehicle parking or storage systems, in which the system used for storage of goods or vehicles is automatic, this includes an area usually referred to as the store (1), that consists of the entire parking area, divided into modules (2) which are the areas occupied by a specific number of shelves or towers (3), each comprised of several storage or parking spaces in superimposed layers, one on top of the other (4), whether these be fitted or not with a device for transferal (6) of the goods (5) or spaces, grouped together in the towers (3) and with increasingly higher numbers corresponding to the time taken to cover the distance from these to the position at the grid reference corresponding to the origin of coordinates, over the rail system (7) on which the motorized or powered trolley (8) moves, with the special feature that this powered trolley (8) can be introduced below each tower (3) in order to transfer this together with its load across the rails from the goods or vehicle deposit/collection points (11), opposite the fixed lift (9) or mobile lift (10), to the grid reference which the tower (3) is destined to occupy in the corresponding module (2) in the store (1).

Using a signal panel (12), drivers of the mobile lift or fork lift truck (10) or users of the car park, will receive the signal from the computer control (13) indicating the position in the loading bay (14) or the vehicle positioning stand (15) from which the vertical transfer of the goods must take place, depending on whether this is to be carried out by the fork lift truck (mobile lift) (9) or fixed lift (9).

The fixed lift system is fitted with transferal systems (5) for loads (5) or vehicles (11), that can be considered as goods with wheels, these transferal systems are located in the loading bay or stand and consist of sets of continuous slat conveyor belts (16), that, depending on the application of the system or characteristics of the load, vary in their orientation and position, eg. with goods of a height easy to manipulate and vehicles or large containers of goods these are situated at ground level, in all cases these transport belts (16) are operated when the fixed lift (17) platform is on a level with the corresponding level of the tower (6), thus achieving transferal of the goods or vehicle to the inside of the tower, or by the reverse operation removing the goods from the level of the tower (6) that has been transported to a position in front of the fixed lift by the powered trolley (8).

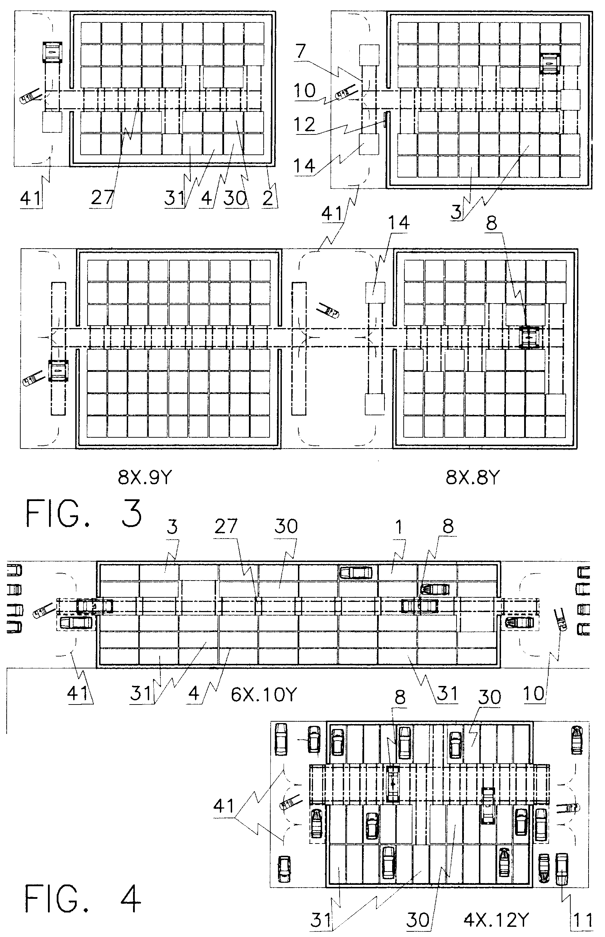

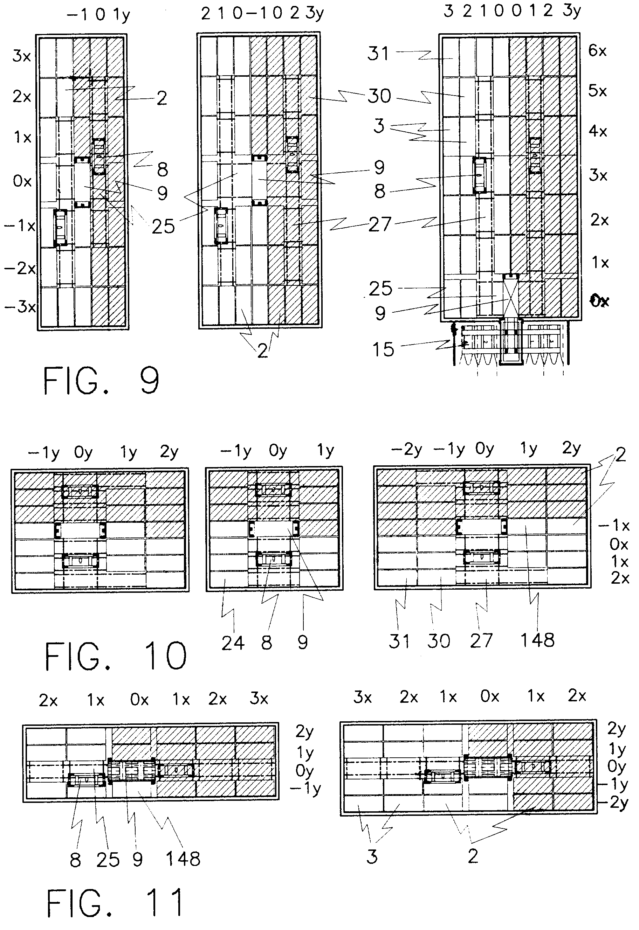

Figures 3 and 4 show a diagrammatic representation of examples of the application that use the mobile lift or fork lift truck (10), it shows the distribution of the module (2) with the loading bay outside the storage area (1), figures 9, 10 and 11 show a diagrammatic representation of the store (1) and figure 13 shows the vehicle positioning stand of the fixed lift (9) application for vehicle (11) parking.

The improvements described previously are mainly used in two models.

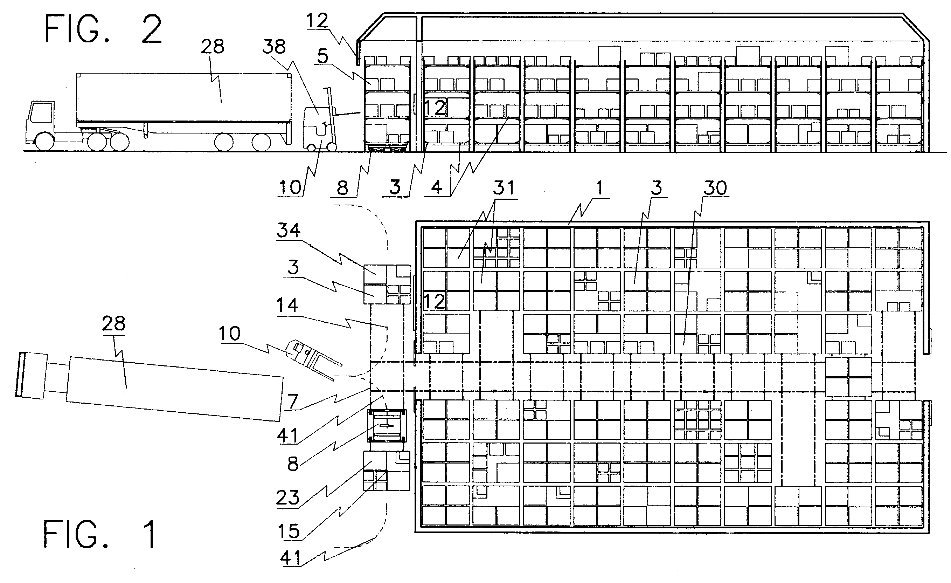

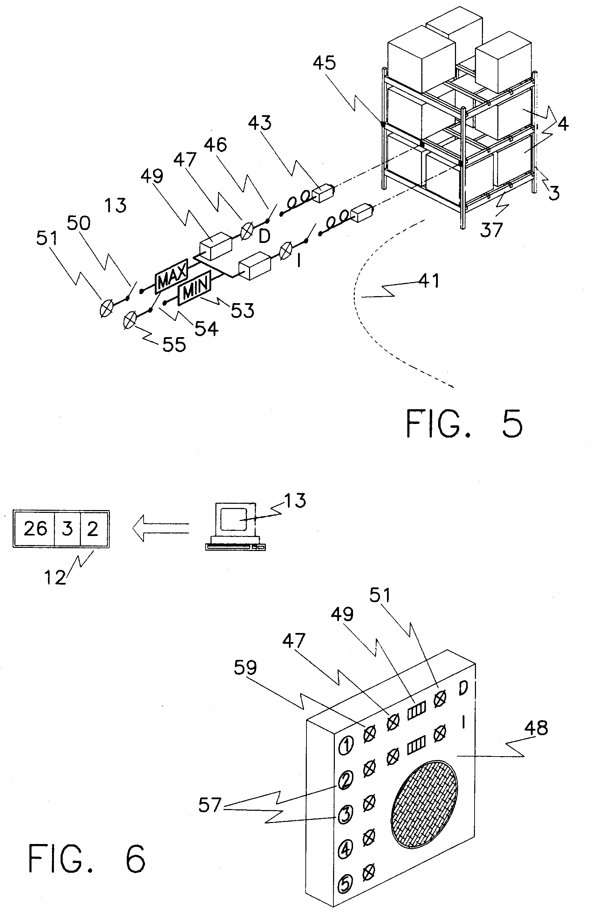

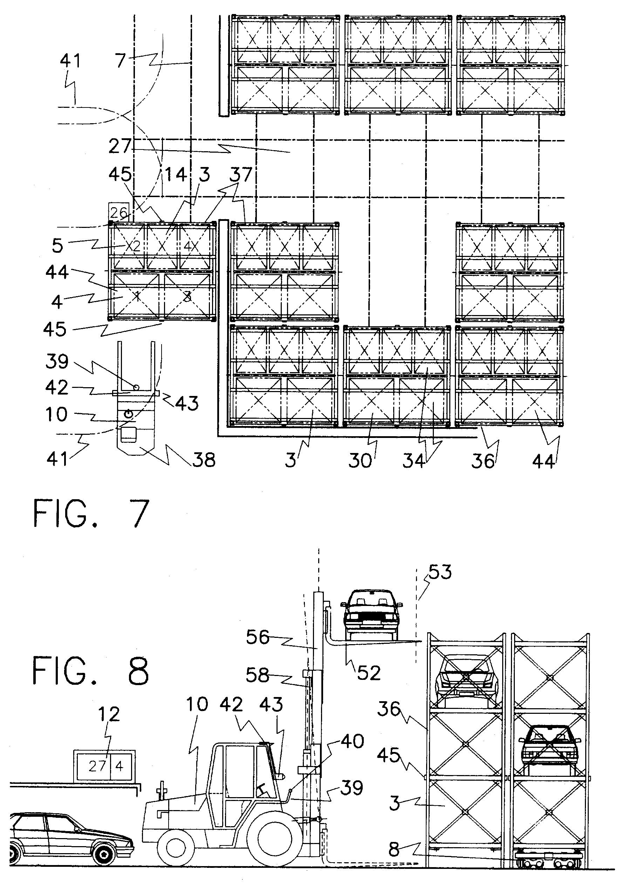

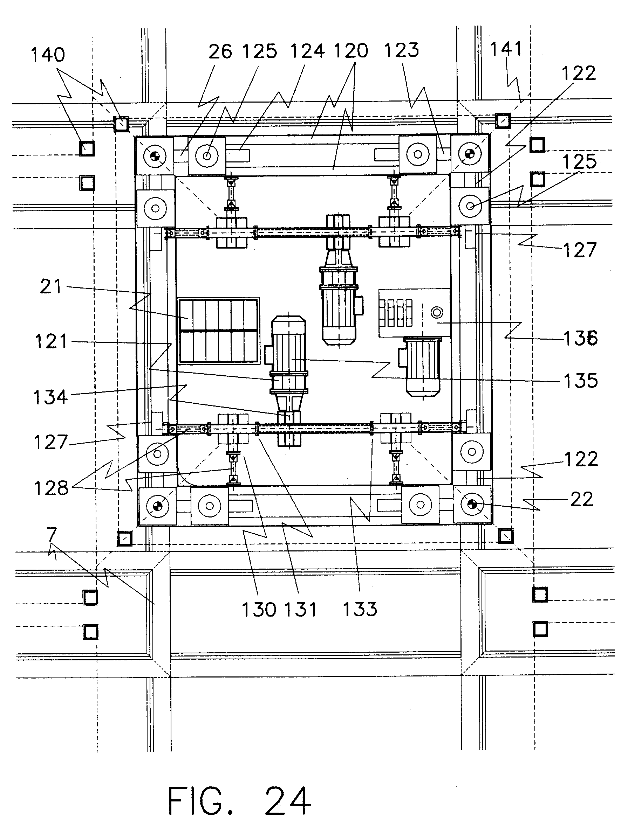

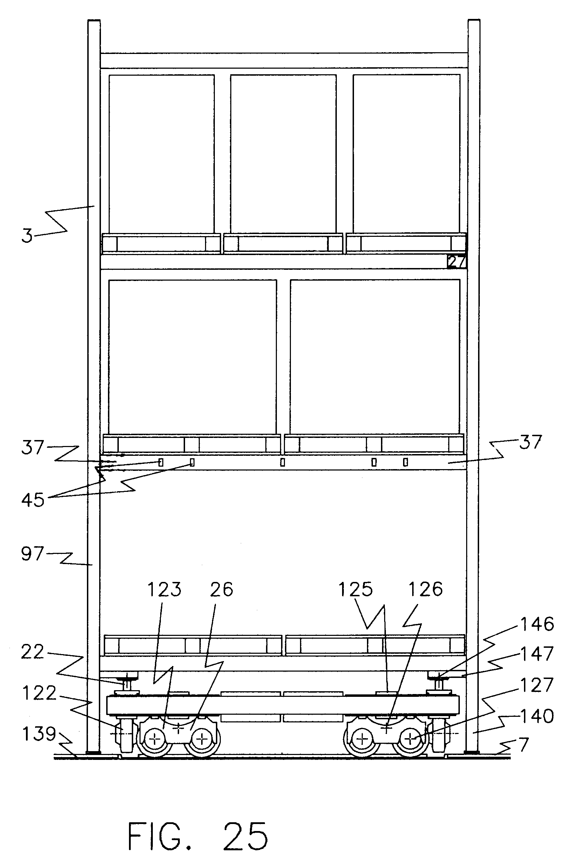

### In stores with mobile lift (Figures 1 to 8 and 24 and 25).

When the control computer (13) of the store receives data referring to the quantity and characteristics of the load entering, it determines which towers have free spaces (3), these are then moved from the store (1) to the loading bay (14), to do this it orders the exchange of the tower selected with free space from the store with the tower that is situated in the loading bay (14), origin of coordinates of the powered trolley (8) that is situated below the tower in the loading bay (14), with the number of the tower that has been summoned from the store, these numbers are introduced in the movement formulae of the control computer powered by the batteries (D.C.) (21) of the powered trolley in (14), that raise the lifting cylinders of the P.T. (22) that, in turn, lift the tower situated in the loading bay (14) or another tower situated in the second position in the loading bay (23), since there could be several towers in the loading bay, but only one with a powered trolley underneath, the tower is transported over the rail system (7) from the loading bay to its predetermined grid reference (24) in the store, where the powered trolley deposits the tower that it supports and moves by guiding its wheel tandem (26) across the rail system (7) to the grid reference (24) of the summoned tower in order to collect this tower and transport it along the service lanes (27) to outside the store (1) and deposit it in the loading bay (14) or (23) programmed by the control computer.

The fork lift truck or mobile lift (10), situated in the loading/unloading bay (14) collects the goods, if possible in paletted form, from the actual transport vehicle (28) in the loading bay itself, at which the goods have arrived to be stored or have come from the end of the manufacturing chain of a manufacturing process adjacent to the loading bay (14) of the store, using the fork lift truck for the short, direct manoeuvres, without leaving the loading bay (14), to place the goods to be stored on the shelves (4), recorded on the, preferably illuminated, signal panel (12), operated by the, preferentially computerized, control (13), the number indicates the shelf position (3) assigned to the load carried by the truck (10). Once the driver at the wheel of the truck has finished his operations with one tower he communicates this to the control system or disactivates the switch (12) on the tower, from this moment the control computer can exchange this tower for one of the towers situated in the store, forming rows or lanes of direct (30) or indirect access (31) to the service lane (27), with access to the indirect tower (31), before placing the corresponding direct tower (30) in the service lane, a special feature of this design is that these shelves (3) on which the goods (5) or vehicles (11) are stored, which are transported and guided along a rail system (7) built for this purpose, in the direct (30) and indirect lanes (31), and when there is more than one indirect row on each side of the service lane these indirect towers (31) are not assigned a fixed grid reference (24) in each module and can exchange grid reference with that of the column of the indirect row (32), which, together with the service lanes and turnings or crossing areas (27), make up the set of grid references in the store (24), these consist of reference numbers that determine and identify the location according to the X and Y axes that, together with the shelf height or shelf level (4) determine, in each module (2) all the positions of the goods in a system of x,y,z coordinates, the origin of each module is situated in the loading bay (14), and which, together (25) determine the entire parking or storage area of the store (1).

The driver of the fork lift truck makes the necessary manoeuvres in order to align the truck with the tower (3) and along its side in order to gain optimum accessability to the desired position on the shelf or level of the tower (34), in this operation he is assisted by bands or strips (36) painted on the floor, parallel to the horizontal side arms (37) of the tower in the loading bay (14) and perpendicular to the forward movement (38) of the truck, the driver must try to align these with the parallelism marked by the reference bands (39) situated in the lower part of the truck that assist the driver to align the truck in front of the tower, the driver must have a clear view of both ends (40) that assist him in determining the parallelism and alignment of the truck (10) on its approach to the tower (3) situated in one of the positions of the loading bay (14), the driver is also assisted in his steering by the presence of additional lines of paint (41) preferably on the level, of different colours, that are labelled with the position of the corresponding level, these lines (41) are orientated perpendicularly to the previous bands (36) at an appropriate distance and thickness such that the driver can follow the appropriate line, preferentially viewing them through sights or a guide bar (39), and thus can steer the truck (34) along the axis on which the goods (5) are located on the shelf or level (4) of the tower (3) situated in the loading bay (14) and indicated by the signal panel (12), for which, preferentially, the same number of differentiated lines (41), labelled with the number corresponding to the position on the shelf (34), can be found as positions on each tower level or shelf, usually two and a maximum of three. The previous system of manual alignment and placing of the goods by the fork lift truck, is optionally supplemented with an automatic system, preferentially situated in the upper part of the driver's cabin of the truck (10), that has a U-shaped frame (42) which is wider than the load (5) that is fitted with a, preferentially photoelectric, distance measuring device (43) on each end, the range of which exceeds the length (44) of the goods (5) in the direction of the forward movement of the truck (38), these measuring instruments are perpendicularly aligned with one of the horizontal side arms of the shelf (37), producing a double action, the first that manoeuvres the truck (10) until this is in front of and aligned with the tower (3), indicated by the signal panel (12) of the loading bay (14), to achieve this it follows the guide lines marked on the floor (41) followed by alignment with and reading of the corresponding paint marking or reflector (45) situated on one of the side arms (37) of the shelves, this causes the circuit in (46) to close and the indicator (47) on the control panel (48) situated in the cabin of the truck (10) in view of the driver is switched on, the second action consists of steering the truck until two reading points on the horizontal side arms (37) are detected by the two distance measuring devices (43), each reading (43) is recorded on a distance electronic indicator (49), that informs the driver of the parallelism between the truck (10) and the tower (3) situated in the loading bay (14), and, when both the indicators (49) record the same distance, with the circuit in (46) still being closed, the contact is automatically closed down (50), this activates a light and sound signal (51) on the control panel (48) that informs the driver that he can begin to lift the truck's fork arm (52), after completing this manoeuvre the driver moves the truck forwards, inserting the tines of the fork (52) under the load in position (34), that has been assigned by the control computer (13) indicated on the control panel (12) of the loading bay (14), the movement of the truck produces a decrease in the reading in (49) until a minimum predetermined distance (53) has been reached, this causes blockage of the forwards movement of the truck, on activation of a point (54) in the circuit that switches on the light (55) on the control panel (48), this informs the driver that the loaded or unloaded forks are in position and to stop the truck movement, to deposit or collect the load and retreat the fork (52), with or without the load (5) from the position on the shelf (4) of the tower (3), indicated by the panel (12) and begin to lower the fork arm (56) of the truck, followed by its free movement to deposit the load or to carry out a new loading or unloading operation on the same or another tower, movement of the lifting of the fork arm (52) of the truck, with or without its load (5), is operated by a control panel (48) situated in the cabin of the fork lift truck (10) that is equipped with a signal and switch board (57) of the shelf levels (4) of the tower (3) that are connected to end of strokes (58) situated at the distances corresponding to the different levels (4) of the tower (3) along the telescopic elements of the fork arm frame (56) belonging to the truck (10). When the driver of the truck pushes a button on the switch board (57) of the panel (48), the level (4) indicated by the panel (12) of the loading bay (14), is preferably disconnected from the normal or manual operation of the truck (10) and is connected to the automatic system that produces the automatic elevation of the load (5), when the driver observes that the load has been raised to the correct level (4) indicated on the panel (12), by illumination of the pilot light (59) on closure of the circuit in (60) on the steering and control panel (48), he moves the truck forwards inserting the fork (52) underneath the load in position (34) assigned and indicated by the control computer (13) on the panel (12) of the loading bay (14).

Requests for the exit, which are the reason for the transferal of the towers (3) that are in the store (1) to the loading bay (14), together with the entrance of goods, the order for which is given by the switching off or shut down by the driver of the truck of the (10) of the panel (12) corresponding to that tower (3), in which the goods from (28) have been loaded, are translated into messages for the control system (13) that processes them and calculates the most suitable order in which the requests for each module or powered trolley (8) should be carried out in the minimum time with maximum output, this process should, preferably, be carried out by a computer doted with a special management programme, that finally sends a coded message to the powered trolley indicating the positions corresponding to the operations it must carry out, this is followed by the admission of the goods from (28) or (29), usually from one supplier, in this case all the goods belonging to one supplier that are situated in different towers are collected together in one or more towers thus reducing the time taken to withdraw the goods from the store when the client requests them, in this way the efficient transport of loads per truck in the admission of the loads is also achieved for their exit from the store, given that all the operations to rearrange the goods and position them for rapid exit from the store are carried out at times of low truck (10) activity.

### Stores with fixed lift

The main characteristics that distinguish this system from the models that use a mobile lift or truck (10), are the loading and unloading operations of the towers (3) in the store (1), with the load or vehicle being transferred to the inside of the fixed lift (9) that, by its vertical movement, positions the load (5) or vehicle (11) in the vehicle stand or collection area of the load operators or vehicle owners.

Given the characteristics of this type of model, the best rate of turnover and, therefore, its most logical application is for parking vehicles, with a high demand of rotation, it is, therefore, highly suitable as an automatic car park in cities with traffic problems, in underground or above ground buildings or underneath paved areas or squares.

Each set of shelves or tower (3), is assigned, to assist in its management and control of its movement, a grid reference (24) according to "X" and "Y" coordinates, that, together with an indication of the shelf level (4), define in each module (2) all the possible positions available for storing the goods, according to a system of x,y,z coordinates (23), the origin of coordinates (0,0) in the fixed lift model is the grid reference (25) that is in front of the fixed lift (9), in both applications the turnings or crossing areas (27) are assigned grid references with X=0 coordinates, with the positive direction of the X axis corresponding to movement along the service lanes (27) away from the origin of coordinates for the X coordinates and in a positive direction for the Y coordinates, corresponding to the grid references (24) to the right of the fixed lift or the X axis, moving progressively away from the service lanes and the turnings (27) of the corresponding module, and the negative direction in the opposite direction, with the special feature that the towers of the indirect rows (31) are not assigned a fixed grid reference in the each module (2), these have the same X value and the same sign of Y value.

The arrangement of the grid of positions corresponding to grid references (24) of the store (1) that comprise the two modules (2) that attend each side of the fixed lift (9), are designed according to the dimensions of the space available on that level, such that the movement of the towers along the service lanes (27) takes place along the width (Fig. 9) and length (Fig. 10) and the movement of the tower along the service lanes (27) and transferal of the vehicle between the tower and the lift along the length of the vehicle (Fig. 11).

The vehicles usually enter the reception level or vehicle reception/collection stand (15) by means of a ramp, underneath, on top of or to the side of the store floor (1), in the above ground car parks (types II and III), underground types (types IV and VII) or lateral types (type I and Figure 12), as shown schematically in figure 13, and following the instructions on the location signal panel (12) that informs the driver of the vehicle (11), the free platform, and also, if possible, indicates the tower (3) and the level (4) of the space where his vehicle will be stored, this information is automatically recorded together with the time of vehicle deposit and printed on a ticket that the driver must collect once he has deposited his vehicle, assisted by the steering tracks that help him to correctly align the wheels of his vehicle on the bands of rollers (61), or, if possible, bands of slats that comprise the continuous transport belts of the vehicle stand (15), these stands (15) are situated adjacent to one, two, three or four sides of the fixed lift (9) and the load or vehicle is transferred from one vehicle reception/collection stand (15) to the lift platform (17) in which the accesses of transferal are not aligned with or orientated at 90° to these special or crossed belt transferal systems (18), comprised of crossed roller transport systems on the lift platform or on the adjacent vehicle stand (15), this acts in combination with transferal systems or circuits of the platform (16) and the transferal systems of the corresponding tower shelf or level (19), the system is comprised of cross roller transporters of the platform (18), by two series of three slat or roller transport belts of different lengths, with continuous belts, preferentially of slat chains driven by a motor set (62), each of the two series operating in two perpendicular directions X and Y, of the three beds of rollers of each series, one which covers the central section (63) between the turnings (64), and the other two (65) which cover from the two turnings to the ends of the platforms, resulting in the alignment or levelling of these belts of slats or rollers (65) so that the load can be transferred to the corresponding section of the slats (16) of the platform or transferal system (19) of the corresponding level or shelf of the tower; the turnings or turning (64) is an intermediate area between the two beds of rollers (63) and (65) of each series, this area (64) is comprised of a roller device or cross roads, situated in the four crossing areas of the two roller series, one special feature is the fact that each turning system (64) has a series of shafts on which several short rollers (67) are mounted, which act as an extension of the idler rollers (61) in the adjacent beds of rollers of the X and Y series. This series of roll shafts (67) are situated in the crossing areas (64) and the shafts (66) pass through the spaces between the rollers of the other series (68) that have independent spin axes (69) for each roller (68) which are perpendicular to the drive shaft (66), the rollers (68) fit between the rollers (67). Each roller (68) receives its turning movement preferentially from another lower roller (70), therefore both surfaces of rollers (68) and (70) must be in contact and have grooves or rough surfaces that may or may not be interlocking but which ensure that the turning movement of the upper roller (68) brings about a turning movement in another lower roller (70), each upper roll shafts is independent and, like the lower roller, is supported on a U-shaped support (71) on which the pairs of rollers (68) and (70) are supported. The lower roller (70) is attached to the shaft (72) which is the same for all the lower rollers (70) which are in line with this shaft, in order for this to occur this shaft (72) crosses the U supports (71) each of which with its two rollers forms an independent unit, and are fitted between the rollers (67) that rotate at 90 degrees with respect to the two support rollers (71) in their lifting-lowering operation, these supports (71) are joined to a support plate (73) that comprises the upper plate of the lifting mechanism (74), that is, preferentially, hydraulically driven, with the four hydraulic cylinders (74) being driven from the four crossing areas (64), like the shafts of the two attached series of rollers (67) and (70) which are, if possible, centrally driven, for which the shafts (66) are joined by pulleys (76) situated on the ends of (66), to one of the two chain transmission circuits (77), each circuit is driven by chain (78) pulley or pinion in one of the outputs of the electrical gear motor (79). Analogously, all the shafts (72) of the lower mobile rollers (70) have a chain pulley or pinion (80) on their ends that receives the movement of one of the two continuous chain transmission circuits (81), that, together with the other parallel circuit, is driven by two driving pulleys or pinions (82), that, being connected by elastic transmission (83), cardan or similar, can correct the disalignment or change in position of the pulley shafts (82) by lifting and lowering rollers (68) and (70) in the support (71), produced by the operation of the lift mechanism (74) that is connected to the two outputs of the motor-reducer (84) that is, preferentially, situated below the surface of the lift platform (9). Analogously, the spindles of the lift mechanism, preferably interconnected, situated in the four crossing areas (64) will be activated to one of the two continuous belt circuits (85) by a pinion (86) situated in the shaft of each spindle (75), each circuit also has another pinion (85) that is joined by elastic transmission (87) through which it receives the driving action and that enables the lifting movement and movement of the shafts (75) which, in turn, are joined to the other end of the coupling or elastic transmission (87) to one of the output shafts of the motor-reducer set (88), situated below the surface of the lift platform. With these transferal systems one can optionally collect or deposit the load from one of the two possible superimposed levels of the lift platform (17) by one of the four possible sides, both of the loads or vehicles proceeding from the levels of the towers (3) with their transferal systems (19), and even up to two vehicles simultaneously, either to or from the same tower or from two different towers adjacent to the lift, and also from the four possible positions on the vehicle stand (15) in the reception area.

Once the vehicle is on the platform of the fixed lift (17), the lift raises or lowers until its device for transferal of the vehicle or goods is in line with the corresponding level of the shelf (6) situated opposite the lift, such that the transfer belts or transport belts of one of the possible superimposed levels of the fixed lift (18) are continuous (16) (18), both of these are operated independently but at equal speeds, and by vertical movement or not of the fixed lift (9) are arranged to be continuous with the continuous slat conveyor belts at shelf level (19) that are driven by a device (20) situated on the floor of the platform (17) one at each available side or access, this is comprised of a motor-reducer set (89) with lateral coupling and gradual start (90) that acts on the track arm (91), that is fitted with a length adjustment device that operates either by the use of hinges or preferentially by movement of the system along the platform support (17), on the end of which there is a crown wheel (92) that transmits the turning movement to a driving disc or pinion (93) in the level of the lift opposite the lift, previously applying pressure to a lever (94), that frees the locking pawl (94) situated in the horizontal side arm (96) of the tower level nearest the lift, that is attached to the driving plate (93) with the central part of an shaft (98) that leans on the support gusset of the wheel shaft (99) on the ends of the two profiles (100), situated in the centre of the level (4), the turning movement is transmitted to a chain or pinion wheel (101), situated on the ends of the shafts (98), each of these acts on a closed or continuous circuit, these steel chain transport belts (102) run symmetrical to each other, each circuit is situated on the shaft of the load supports in the horizontal plane (103), and at a height such that the loaded section or upper section of the chain (104) and the empty or lower section (105) of which each closed circuit is comprised (102) pass close to the upper and or lower face or side respectively of the profile of the horizontal side arm (96), in order to do this, in addition to the driving or traction wheel (101), on the other end of each circuit that corresponds with the trajectory of movement required there is another inverter chain wheel (106), preferably fitted with a chain take-up device (107), the chain of each circuit is closed (102), interlocking and fixed to two frames or sets of slats (108) which bear the load, these slats are preferably steered and supported by a sliding movement over several profiles (100), the profiles are parallel to the closed circuit (102) on both sides of the load support shaft (103) present in each level (4) of the structures or towers (3), these profiles (100) are situated and operate next to the two sets or groups that slide over them, in order to produce continuity between the corresponding transferal system or conveyor belt (18) of the lift. The sets of slats (108) on which the load is supported, are comprised of rungs or slats (109), and intercalated between the sliding surfaces of the slats (109) and the upper face of the central profiles (100), special "C" shaped pieces of material that slide over the contact profile of the slats in the same direction as their movement.

The ends of each of the slats (109) are independently attached at each end to chain links (102) that, on its upper or loaded section (104) is supported and steered preferably over a special sliding profile (110), that is supported on the wing of the metal beam (100), that is supported on metal beams (100) situated at the ends and beneath the chain sections (104).

The structures, measurements and articulated joints to the chains of the rungs (109) that constitute the frame are selected in accordance with the weight and type of load to be carried, its length, corresponding to the distance between the profiles (100) of each circuit, and other dimensions such as the thickness of the rungs, will be selected such that they support the load and curvature on its way through the two chain wheels (101) and (106) of the circuit (102), when the two chain circuits are operated, the first frame of slats (112), or that nearest to the drive shaft (98) moves over part of the loaded or upper section (104) of the circuit towards the exit of that shelf level (4) or from the drive shaft (98) until it reaches the empty or lower section (105) at a distance such that the rung of the second frame (113) of the circuit or that furthest from the drive shaft (98) is situated above the driving wheel of the chain (101), i.e. at the end of the route of the second frame (114), when this occurs the first rung (115) of the second frame activates an end of stroke (116), preferably situated on the coupling spindle (91) on the lift platform, that causes the disactivation and reversal of the reversing contactor of the motor set (89), control of the reverse trajectory or the trajectory towards the inside of the level occurs by measurement of the chain pitch by the crown wheel that is adjusted to coincide with the dimensions of the load entering, and/or stops or actuators situated in the lower section or in the empty section of the chain circuit (105) that activate the end of stroke on their way along the shaft of the driving plate (98).

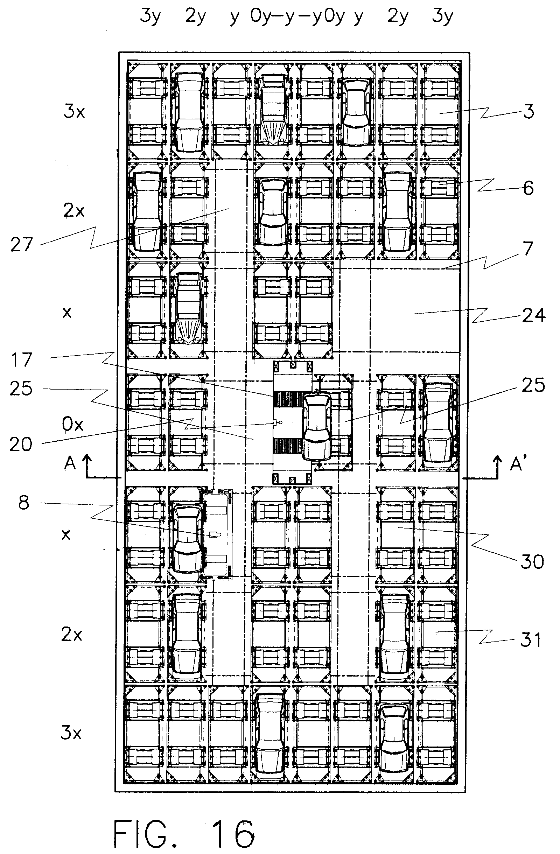

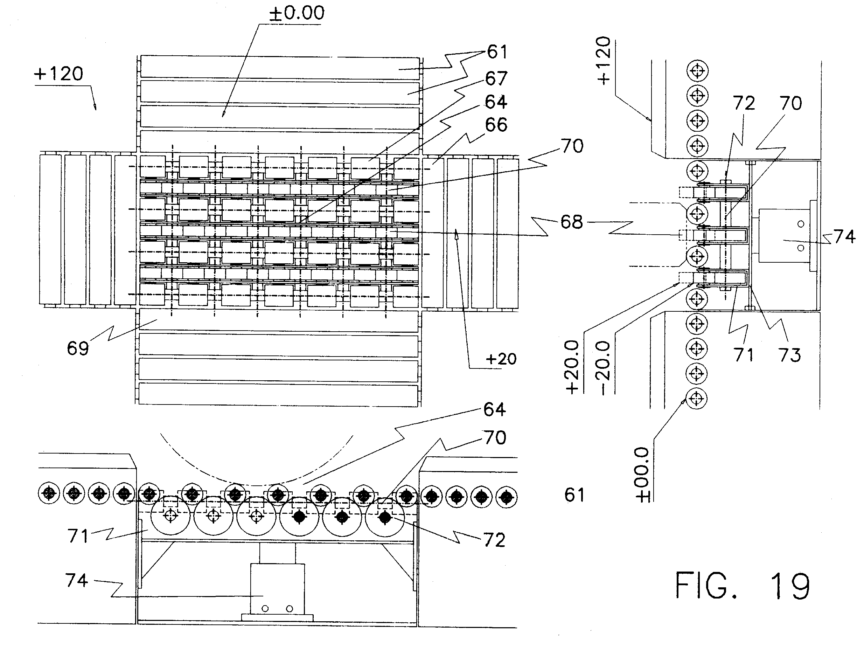

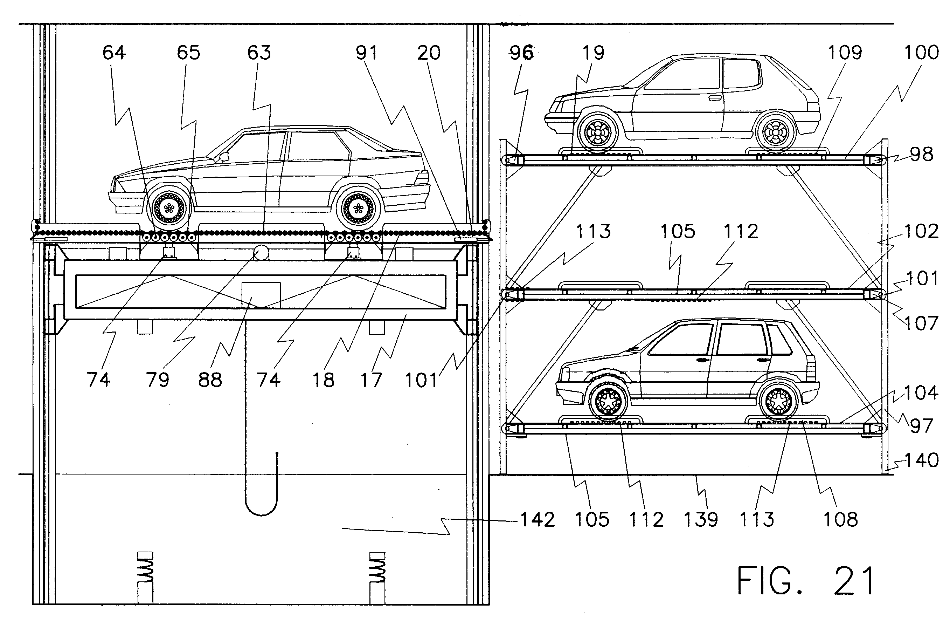

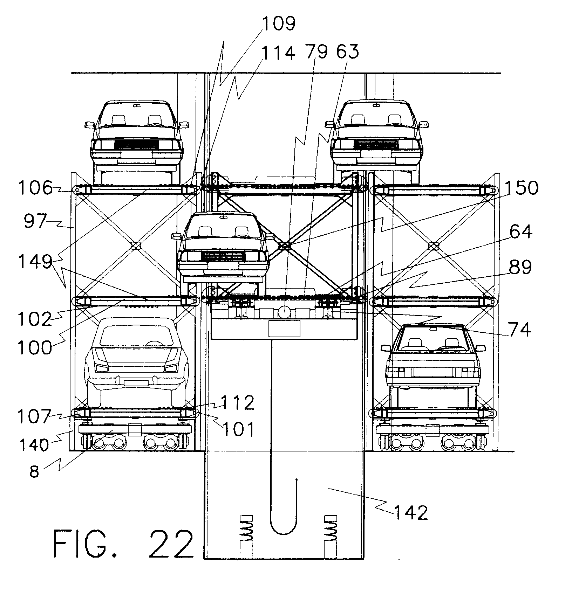

Transferal of the vehicle situated on the platform of the fixed lift, given the characteristics of the cross belt system (18), can transfer the vehicle or load from any one of its four sides, two opposite sides correspond to the grid positions of the turnings opposite the lift, that correspond to the origin of coordinates of the two modules aligned by their service lane and separated by the fixed lift (9). The vehicle or load may be transferred either along the X or frontal axis, as represented in figure 11, 19 and 21 or laterally or sideways, according to the Y axis, as shown graphically in figures 9, 10, 14, 16 and 22.

Once the wheels of the four tandems (123) are in position for movement along the Y axis, that have been raised during the entire journey of the powered trolley (8) along the service lane (27) by the driving action of the four other perpendicular tandems or for movement along the X axis (122), along the rails in a Y direction of the grid reference (24) of the requested tower, operation and electronic control of the motor set (135) brings about a change of direction or a change of the tandems, preferentially via the hydraulic set (136), the cylinders (125) of the tandems of the Y axis (123) are lowered until their wheels (124) are resting on the service lane (7) of the Y direction, these are interlocking and the other four X direction tandems are raised by their own cylinders (125), when the lifting operation has finished these are transferred until they are situated beneath the tower if the tower or shelves is direct (30), if these are situated in an indirect row (31), a direct tower must be first moved into the "bY +1" position of the service lane that corresponds to the adjacent grid reference in the positive direction or moving away from the origin at the crossroads of the summoned tower, i.e. position "bY" of the service lane, a position that is represented in the second module in figure 3.

When the parking control system (13) receives the request for a "summoned tower" other than the tower (3) that is situated opposite the lift (9) and which contains the vehicle that has just entered the car park, either for another newly entering vehicle or for the exit of a vehicle situated in another tower (3) in the same module, in both cases the computer programme activates the powered trolley (8) situated beneath the tower opposite the lift, at the origin of coordinates of movement of the powered trolley (8), the number of the "summoned tower" is introduced in the movement formula of the trolley which, in combination with the data that this already has corresponding to the "tower opposite the lift" and the fact that each tower is assigned to a specific grid reference (24) determined according to X and Y coordinates, formulates the parameters of movement necessary for the trolley to move from the "tower opposite the lift" to the "summoned tower".

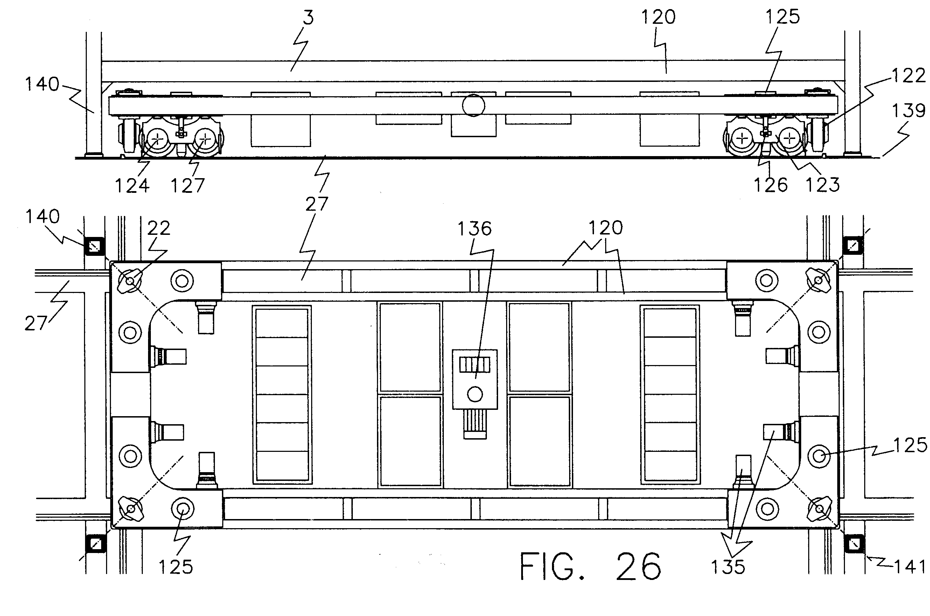

The powered trolley (8) that is situated below the tower that carries the entering vehicle and opposite the lift at the origin of coordinates (25), is comprised of a rectangular double chassis (120) made of two parallel rectangular frames joined by couplings and joints that give the powered trolley (8) a minimum height with optimum support and alignment of the loads. In each of the four corners between the two frame profiles there are two perpendicular tandems, four tandems, one on each corner for movement along the "X" axis (122) and the other four for movement in a "Y" direction (123), each tandem has two wheels (124) with a lifting-lowering device (125), fixed on one side to the chassis (120) and on the other side to the pivoting shaft of the tandem in the direction of rotation (126), with each end of the pivoting shaft resting on the chassis (120), the four lifting cylinders of the shelf (22) are embedded into the double chassis preferentially in the four corners or vertices, the height of the chassis (120) with respect to the rail system (7) is, preferentially, above the wheel axes permitting the driving action of the driving wheel (127) of each tandem that is, of the two wheels (124), the farthest from the vertex of the chassis or the corresponding lifting cylinder (22), and is driven by the driving wheel (127), preferentially by independent engines as shown in figure 26, changes in direction of the powered trolley (8) on the service lanes and turnings (27) situated at grid references corresponding to crossroads or turnings (137), take place by alternating the sets of wheels (124) by lifting-lowering of the tandem (122) and (123) and operating the lifting actuators (125) preferentially by hydraulic cylinders, the actuation circuit of these blocks the lifting movement or movement in the same direction of the four tandems (123) or (122) situated in the four corners of the chassis, whereas the lowering actuators of the other four tandems, perpendicular to the previous tandems (123) or (122) do not reach the end of their trajectory on the rails (7), a special feature of this trolley is that it permits a rolling movement in two perpendicular directions, along the "X" axis with the (122) tandems and along the "Y" axis with the (123) tandems. Another special feature is that during the change in direction movement it only bears the weight of the corresponding wheel tandem and does not rest the load of the tower (3) on the floor of the store (139), the latter in the case that movement of the powered trolley (8) involves conveying the tower (3) using four supports (22) one at each corner, preferentially hydraulic cylinders embedded in the vertices of the chassis (120), in order to carry out this operation the powered trolley (8) is inserted beneath the tower (3) and is raised to a height sufficient to separate the four vertical supports (140) from the floor of the store (139), and the tower (3) is supported by the powered trolley for its movement over the rails (138). All the elements related to the transmission (129), support (120) and (22) or load (140) are arranged at each vertex of the tower on the same symmetrical axis (141), and the distances along this axis of the different elements are as small as possible. The tandem wheels (124) are, preferentially, guided laterally along a central channel that separates two areas of support and movement and that is comprised of a special metal profile made of a strip wider than the wheel which permits it to make be attached the ground (139) with an upturned rim that guides the wheels (124) laterally, the entire length of these rails or lanes have a continuous rolling surface, with absence of the guiding rim at the crossroads or turnings (27) in order to permit the passage of the wheels and the tower legs.

The positions of the powered trolley (8) along the rails, with or without the tower (3), are preferentially controlled by magnetically activated end of strokes at the turnings and other devices situated in the other grid positions (24), at this position the four cylinders situated at the four vertices of the powered trolley (8) that pushes the tower at the base on reaction plates (146) gusseted to the corresponding support (140) are lifted, in which the head of the cylinder fits (22) producing the elevation of the tower a few centimetres from the ground. At the end of the upstroke of the four cylinders the rotating movement of the motor set (135) is reversed and the powered trolley with the summoned tower move in a negative direction or towards the X axis, when these arrive at the turnings, the tandem changes again with a lowering of the X movement (122) and elevation of the Y movement (123), and the powered trolley and the tower move towards the origin (25), opposite the fixed lift, the tower is lowered to the ground with lowering of the cylinders (22) and the vehicle is then removed using the opposite process that was used for loading.

## Claims

1. Modular storage system with mobile shelves, especially applicable for vehicle parking, comprised of two independent parts, the reception area or the vehicle stands for the reception or collection of the goods or vehicles, this is the only area visitable by users; the other area is the storage zone in which the towers on which the goods are stored are situated, these form direct or indirect rows with respect to a generally clear service lane, the goods are automatically placed on superimposed metal shelves, these sets of shelves are mobile and can be moved around by an automated powered trolley (8) that fits beneath these and lifts them, which transports the tower from one place to the next for the collection or delivery of loads and to a position opposite the lift, which can be either fixed or mobile, that collects the load or vehicle and transports it vertically to the reception area outside the storage area, the drivers are assisted by on location signal panels (12) that are controlled by a, preferentially computer operated, switch board (13), that indicates the exact location where the load or vehicle must be deposited or collected from while this is being aligned with the loading bay (14) or vehicle stand (15), the storage volume (1) is distributed among functionally independent modules, each of which contains a number of sets of shelves or towers (3) that can be transported along a system of rails (7) using a powered trolley (8), with its four perpendicular double sets of wheel tandems (26) that are alternately raised and lowered, that permit movement of the trolley in two perpendicular directions that coincide with the "X" and "Y" axes without bearing the weight of the load or resting the tower or the weight of the trolley (8) on the floor, movements are according to an X,Y,Z system of coordinates, each unit is assigned a grid reference which corresponds to the location of the loaded towers in each module (2) in the storage area (1), the origin of coordinates or the place from which the powered trolley (8) begins its movement is situated at the loading bay (14) that coincides with the location of the fixed lift (9) which is situated opposite the two towers (3) of the two modules (2) or independent areas of operation of the powered trolley (8) that coincides with its origin of coordinates that determines the formula of programmed movements, there can optionally be from one to four direct ways of access both in the reception area and in the store, such that the fixed lift can essentially attend up to four different platforms, preferably on opposite sides and also four indirect vehicle stands (15) and four towers, preferably two adjacent towers on opposite sides, this can be achieved because of the combination of its location and the special features of the transferal devices (14) on the lift platform, the shelf levels, loading bay and vehicle stand (15).

2. Modular storage system with mobile towers, especially applicable for vehicle parking, according to the 1^{st} claim, characterized by the transferal device on the shelf level that is comprised of circuits of chains (102) driven from the fixed lift platform, with four sets of slats (108) on which the load or the wheels of the vehicles are supported which slide over fixed profiles (100), the load is transferred into the lift (9) or platform (15) by a transferal system similar to those on the shelves but in this case there are a greater number of slats (109) that form a continuous circuit except for where these transferal accesses are not aligned or are situated at 90° or where the belts are crossed (18) or where the transversal slats are replaced by rollers (65) and where these are crossed by another analogous transversal system, perpendicular and at a different height, in the four turnings there are four frames that are each fitted with two series of alternating rollers, one of which is fixed and the other with elevation, that enable the movement to change direction by 90°, permitting selective transferal into the inside of the lift (9) through any of its four sides, once the platform (17) of the fixed lift (9) is aligned with the shelf level, the conveyor belt or roller system (18) of the platform (17) in combination with the slat conveyor belts (19) at each shelf level of the module (2) transfer the, preferably palletised, load or vehicle from the fixed lift (9) to the shelf (3) with the transferal devices (19). In the opposite process in which the goods or vehicle are unloaded, these are transferred from the shelf or tower (3) of the fixed lift (9). The removal process or alignment of the load by the mobile lift or fork lift truck (10) is assisted by a system of manual control by bands (14) and guiding devices in the truck (43) and (48), once the loading-unloading process by the truck or fixed lift is complete, in the second loading bay positions (23) or at the platform (15), situated at one end of the service lanes and turnings (27), the load is transferred to its grid reference (24) in the store (1) .

3. Modular storage system with mobile shelves, especially applicable to vehicle parking, according to previous claims, the special feature of this system is that the loads (5) are received outside the storage area (1), in a loading bay area (14) in which the goods are loaded or unloaded off the superimposed shelves (4) of the towers (3), by a mobile lift and goods transferal system consisting of a commercial fork lift truck (10) whereas in the area in which the towers are stored there is no loading or unloading of the towers (3) or movement of people.

4. Modular storage system with mobile shelves, especially applicable to vehicle parking, according to previous claims, the special feature of this system is that it is comprised of independent modules or units (2) with respect to the movement of the sets of shelves or towers (3), there are preferably a minimum of two or four of these modules (2), four in the case of the fixed lift system (9), that are preferably computer controlled (13), each module (2) is comprised of a set of shelves or towers (3) that are arranged in two direct rows (30), with each row having direct access to the service lane since these are situated on either side of the service lane and turnings of the rail system (27), behind each of the direct rows there are one or more indirect rows (31) of towers, the service lanes or turnings are directly linked to the loading bay (14) or access and loading-unloading area of the towers, the loading bay is situated at one of the ends of the service lanes of the tower storage area (1), in the fixed lift option (9), loading-unloading operations of the loads from the towers are carried out opposite the fixed lift (25) that separates the two adjacent modules (2) and which is situated at the origin of coordinates of movement, each module (2) has only one transferal device, the powered trolley (8), independent of the towers (3).

5. Modular storage system with mobile shelves, especially applicable to vehicle parking, according to the 1^{st} and 4^{th} claims, the special feature of this system is that the loads (5) situated on the mobile shelves (3) in each module (2), in order to assist their identification and control of their movement, are assigned a grid reference (24) according to a system of X and Y coordinates, that, together with the height or shelf level of the tower (4), determine in each module all the possible positions in which the loads can be situated according to an x,y,z set of coordinates, the origin of coordinates in each module (3) is situated in the loading bay (14) or the area in which the goods are loaded-unloaded, in the fixed lift option the origin of coordinates where x=0 and y=0 is situated at the grid reference opposite the fixed lift (9), in both applications the turnings or crossroads (27) of the service lanes are allocated grid references with coordinates x=0.

6. Modular storage system with mobile shelves, especially applicable to vehicle parking, according to the 1^{st} claim, the special feature of this system is that lifting of the fork arm frame (56), with or without the load (5), is operated by a control panel (48) situated in the truck cabin (10) with a switch board (57) programmed with the shelf heights (4) of the towers (3) that is connected to end of strokes (58) in the fork arm situated at distances corresponding to the different shelf levels (4) of the towers (3) along the telescopic elements of the fork arm frame (56) of the fork lift truck (10).

7. Modular storage system with mobile shelves, especially applicable to vehicle parking, according to the 1^{st} claim, the special feature of this system is that in the mobile lift application, on the horizontal side arms of each level (4) of the tower (3) there are painted strips or non-magnetic coded bands (36) that enable these to be identified by the reading system (43) of the alignment device (42) of the fork lift truck (10), the spaces grouped together or the superimposed levels of the tower (3) are numbered in increasing magnitude according to the time taken to cover the distance from the grid reference corresponding to the origin of the module (14) or (25), forming rows with direct or indirect access to the service lanes (27) for the tower transferal device or the powered trolley (8).

8. Modular storage system with mobile shelves, especially applicable to vehicle parking, according to the 1^{st} and 4^{th} claims of the storage applications with fixed lift with transferal devices (9) situated opposite the origin of coordinates (25), the special feature of this system is that the device for transferal of the load (5) or vehicle (11) situated at each vehicle stand (15) and lift (9) platform (17) is comprised of two sets of double continuous adjacent and parallel transport belts (16), that secure and haul in a cross-wise direction to the movement of the series of slat belts (108), with each slat (109) being attached to a parallel support link parallel of each of the two chain circuits (102), the width of the slats is such that these can pass through the turning radius of the driving wheels or pinions (101) and are fixed to all the chain links (102) or alternate links depending on whether this corresponds to a treadable area, such as the stands or a non-treadable area such as the lift or towers, in all three cases the lower side of the slats (110) slide over fixed profiles (100) that are parallel to the chain circuits and, therefore, perpendicular to the slats in groups of two or three, in order to support the load which is transferred to them from the slats as these slide along the upper surface (111), the ends of the transferal section or driving pinion (101) are curved enabling this to follow the slats as they pass downwards through the pinion (101), thus two parallel continuous slat belts are formed that transport the load along the upper surface (104) to an upper section of an intermediate level, directly supporting the weight of the vehicle wheels (11), the slat conveyor belts (102) are driven by a tensor drum and a driving drum, preferably the two parallel series of belts are driven by an electrical motor-reductor set (62), preferably fitted into the floor of the platform (15) or from the lift platform (17), the transferal system (19) in each shelf level or tower differs from that described for the platform and for the lift in that it is driven from the platform (17) and the slats on the two double sets of chains (102) form four groups or frames usually comprised of six or eight slats situated beneath the sections which support the vehicle wheels.

9. Modular storage system with mobile shelves, especially applicable to vehicle parking, according to the 1^{st} and 8^{th} claims in the fixed lift application (9), in which the transferal of the vehicle or load from a position on the vehicle stand (15) either to or from the lift platform (17) where the transferal accesses are aligned or situated at 90°, these special transferal systems or crossing belts (18) are comprised of crossed transport rollers on the lift platform (18) that act in combination with those of the vehicle stand (16) and the transferal system of the shelf of the corresponding tower (19), the crossed roller system and the lift platform (18) transporters are comprised of two series of three belts or beds of carrier rollers each of different lengths with continuous bands, such that each of the two series can operate in each direction X and Y, and, therefore, perpendicularly, a special feature of this design is that, of the three beds of rollers of each series, one covers the central section (63) between the crossed sections (64), and the other two (65) cover the two crossed sections at the two ends of the platform, these rollers (65) are aligned so that the load can be transferred to the corresponding section of the slat conveyor belt (16) of the stand or the transferal system of the corresponding shelf of the tower; the crossed section connects the two beds of rollers (63) and (65) of each series, this section (64) is comprised of a roller device or crossed section, situated in each of the four crossed sections of the two series of rollers, another characteristic of this system is that each cross device (64) has a series of shafts (66) on which several short rollers (67) are mounted, that are continuous with the idler rollers (61) on the adjacent roller beds of the X or Y series such that this series of shafts with rollers (67) are located in the crossed sections (64), or the shafts (66) pass between the spaces existing between the rollers of the other series (68), the spin axes (69) are independent for each roller (68) and are perpendicular to the shaft (66), rollers (68), therefore, fit between the rollers (67) .

10. Modular storage system with mobile shelves, especially applicable to vehicle parking, according to 9^{th} claim, a special feature of this system is that each roller (68) receives its turning movement, preferentially, from a lower roller (70), in order for this to occur the surfaces of rollers (68) and (70) are rough or grooved, and may or may not have intercalating grooves, that guarantee the turning movement of the upper roller (68) as the lower roller (70) gyrates, each shaft (69) of the upper roller (69) is independent and is supported, like the lower roller, on a U shaped support (71) on which the pairs of rollers (68) and (70) are located, the lower roller (70) is continuous with the shaft (72) which is shared by all the lower rollers (70) coincident with this shaft, in order for this to occur the shaft (72) crosses the U shaped supports (71) each of which is independent with its two rollers, which fit between the rollers (67) that rotate at 90° to the two support rollers (71) during its lifting-lowering operation, these supports (71) are joined to a support plate (73) that comprises the upper plate of the lifting mechanism (74), preferentially hydraulically driven, the hydraulic cylinders (74) of the four crossed sections (64) and the shafts of the two series of rollers (67) and (70), preferably centrally joined, for this to occur all the shafts (66) are connected via pulleys (76) situated at the ends of the shafts (66) to one of the two chain transmission circuits (77), each circuit is driven by a chain pulley or pinion (78) at one of the two outputs of the motor set reducer (79), all the drive shafts (72) of the lower mobile rollers (70) must present a chain pulley or pinion (80) on each end that receives the movement of one of two continuous chain transmission circuits (81), that, in combination with the other parallel circuit, is driven by two driving pinions or pulleys (82), that, being joined by elastic transmission (83), cardan or similar, corrects the disalignment or change in position of the pulley shafts (82), caused by the lifting-lowering movement of rollers (68) and (70) on the support (71), produced by the driving action of the lift mechanism (74) that is connected with the two outputs of the motor set reducer (84) that is preferentially situated under the surface of the lift platform (9), the spindles of the lift mechanism in the four crossed sections (64), that are preferentially interconnected to one of the two continuous chain circuits (85), are driven by pinion (86) that is situated on the shaft of each spindle (75) that, in turn, are joined at the other end of the coupling or elastic transmission (87) to one of the two output shafts of the motor set reductor (88) situated beneath the surface of the lift platform.

11. Modular storage system with mobile shelves, especially applicable to vehicle parking, according to the 1 ^{st} and 10^{th} claims, in the fixed lift application, a special feature of this system is that the driving mechanism of the of the load or vehicle transferal device from one of the shelves situated opposite the fixed lift (9) on the four sides or accesses possible to the other sets of shelves of the two modules that are adjacent to the lift platform (17), presents a slatted or crossed roller transferal system for access at 90° in both cases via a driving mechanism (20), situated beneath each level of the platform (17) on each of the sides or accesses available, formed by a motor reductor set (89) with coupling and gradual start (90) that acts on a track arm (91) fitted with a device for adjusting the length of the arm by use of hinges or sliding, this is fitted at one end with a crown wheel (92) that transmits the turning movement to a driving plate (93) on the shelf level opposite the lift, prior to this pressure is applied to a lever (94) that releases the breech block (95) situated on the level of the tower opposite the lift.

12. Modular storage system with mobile shelves, especially applicable to vehicle parking, according to the 1^{st}, 8^{th} and 11^{th} claims, in the fixed lift application with transferal device, a special feature of this application is the transport or transferal system on each shelf level at the height of each horizontal side arm (96) of the structures with sideways transferal systems (20), in front of or nearest to the fixed lift of each level (4,) there is a lever for blocking the driving plate (94) that, prior to operating the transferal system, is pushed by the track arm (91) of the lift platform, producing the unblocking of the driving plate (93) situated in front of and in the centre of the horizontal side arm (96), this engages (93) the crown wheel (92) at the end of the track arm (91) and receives a turning movement, produced by a motor set (89) situated on the lift platform, since this is attached to the driving plate (93) with the central part of the shaft (98), that is supported on the support gusset of the wheel shaft (99) situated on the ends of two of the four profiles (100), the two of which are situated at the centre of the level (4), this transmits a turning movement to a chain driving wheel (101) at one of the two ends of the shaft (98), when each of these act on a closed or continuous circuit, with the continuous steel chain conveyor circuits situated parallely to each other (102), each circuit lies on the load support shaft in the horizontal plane (103), the height must be such that the loaded or upper section of the chain (104) and the empty or lower section (105), of which each continuous circuit is comprised (102), pass close to the upper and lower side respectively of the profile of the horizontal side arm (96), in order for this to occur in addition to the driving wheel (101) at the other end of each circuit, that coincides with the trajectory of the movement required, there is another similar inverter wheel (106), preferably with a chain take-up device (107), the chain of each circuit is closed (102) and interlinked and fixed to two frames or sets of slats (108) on which the loads are supported in each level (4) of the tower, these profiles (100) operate together with two frames or groups of slats that slide over them, and are continuous with the corresponding transferal system or transport belts (18) in the lift.

13. Modular storage system with mobile shelves particularly suited to vehicle parking applications according to the 12^{th} claim, a special feature of this system is that the system of slats on which the load is supported (108) is comprised of rungs or slats (109) and, inserted between the sections of the slats on which the loads slide, C shaped pieces of a smooth material on the contact profile of the slat in its direction of movement; the slats (109) are each independently attached at both ends to all the chain links (102) that, in their upper or loaded section (104) are supported by and guided over a special smooth surface (110) that is supported on the upper wing of the metal beam (100), the structure, measurements and chain couplings (102) of the rungs (109) are selected in accordance with the characteristics of the load transported, its length is determined according to the distance between the profiles (100) of each circuit and its other measurements or the thickness of the rungs is chosen such that these can support the load and the curvature of its trajectory through the chain wheels (101) and (106) of the circuit (102), when the two chain circuits are set in motion the first set of slats (112) or that situated nearest the drive shaft (98) moves along the upper loaded section (104) of the circuit towards the exit of the level (4) or of the driving shaft (98) until it reaches the empty, or lower section (105) and the rung of the second frame (113) of the circuit, or that situated furthest from the drive shaft (98) situated above the driving wheel of the chain (101), i.e. at the end of the trajectory of the second chain (114), at this moment the first rung (115) of the second frame activates an end of stroke (116), preferentially on the track arm (91) of the lift platform, that produces the halt and reversal of the contactor of the turning direction of the motor set (89), the reverse trajectory towards the interior of the level is controlled by measurement of the chain pitch by the crown wheel (92) that is made to coincide with the measurement of the entering load and or the stops or actuators on the lower or empty section of the chain circuit (105) that activate an end of stroke as they pass through the shaft of the driving disc (98).

14. Modular storage system with mobile shelves, especially suited to vehicle parking according to the 1^{st}, 2^{nd}, 3^{rd} and 4^{th} claims, the special feature of this design is that the powered trolley (8) is comprised of a double rectangular chassis (120) formed of two rectangular chassis of parallel profiles joined by short couplings and attachments, in each of the four vertices between the two chassis profiles there are two perpendicular tandems, four tandems in each vertex for movement along the X axis (122) and the other four for movement in a Y direction (123) each presenting two wheels with a lifting-lowering device (125) attached on one side to the chassis (120) and on the other side to a pivoting shaft of the tandem in the direction of rotation (126), each end of the pivoting shaft rests on the chassis (120), this is embedded in the double chassis, preferably with the four lifting-lowering cylinders of the shelf (22) in its four vertices, the chassis (120) is, preferentially, situated above the wheel axes on the rail system (7), thus permitting activation of the driving wheel (27) of each tandem that corresponds to the furthest of the two wheels (124) from the vertex of the chassis or the corresponding lifting cylinder (22), the driving wheel is preferentially driven by independent tandem motors or by a centralized motor, with an articulated joint (128) that absorbs both the movement of the tandem when this pivots on the shaft (126) and the lifting-lowering movement when the actuator is operated (125) to change the tandem on the rails, this joint (128) is attached at the other end to a return output or reducer (129), in which the output (130) can be in line with the input (130) without a change in ratio and the other output at 90° with a reduction in ratio that permits the speed of the movement in an X or Y direction to be regulated, in all the applications this is joined to two tandems (122) and (123) which are also arranged at 90° by of two return outputs (130), the input shaft is attached by a coupling (132) to one of the two outputs (133) of the reducer (134) of the motor set (135) that, to modify or decrease the drift charge can present a parasitic current inhibitor (121) preferentially attached between the reducer input and the motor output, the whole motor set should be situated in the centre of the chassis (120) in line with the driving shaft (127) and the input return shaft (131), assembled on a support bridge (136), with a similar presentation with respect to the central motor set that operates the two tandem pairs, this arrangement is repeated in the other four tandems on the opposite side of the trolley.

15. Modular storage system with mobile towers, especially suitable for vehicle parking, according to the 14^{th} claim, a special feature of this design is that in both solutions, whether this be independent by tandem or centralized, the power supply, preferentially electrical, is, in all cases regulated by direct current, by sets of batteries (21), that also supply the hydraulic motor set (138), the changes in direction of the trajectory of the powered trolley (8) on the service lanes and the turnings (27) that correspond to the grid references of the crossroads or turnings (137) are achieved by alternating the sets of wheels (124) produced by lifting-lowering the tandem (122) and (123) driven by the lifting actuators (125) preferentially by hydraulic cylinders, the operational circuit blocks the elevation of tandems (122) or (123) situated in the four vertices of the chassis in the same direction while the lowering actuators of the other four perpendicular tandems (123) or (122) do not reach the end of their trajectory or support on the rails (7), it is necessary to check that the tandem wheels (124) are, preferentially, guided laterally along a central channel that separates two sections of support and movement comprised of a special metal profile formed of a strip that is wider than the wheels in order to permit it to be attached to the floor (139) with a rim that guides the wheels (24) laterally, this track (138) has a continuous rolling surface along its entire length and the rim is only absent in the grid references corresponding to turnings or crossroads (27) in order to enable the passage of the wheels and the tower legs.

16. Modular storage system with mobile shelves, especially applicable to vehicle parking, according to the 1^{st}, 9^{th} and 15^{th} claims, in the fixed lift application, a special feature of this design is that the powered trolley (8) with or without a tower or set of shelves (3) from one module (2) to another travels along both, preferably aligned, service lanes (27), with the respective service lanes being separated by the elevator pit (142), the depth and dimensions of this are such that the upper level of the lift platform (17) can be on a level with the floor of the store (139), such that the rails (144) for the powered trolley in the lift level (17) are aligned and continuous with the rails of the service lanes (27) of each module.

17. Modular storage system with mobile shelves, especially applicable to vehicle parking, according to the 1 ^{st}, 4^{th}, 8^{th}, 9^{th}, 10^{th}, 11^{th}, 12^{th} and 13^{th} claims, a special feature of this design is that the location of the fixed lift (9) together with the functional and technical characteristics, and their interaction with the mobile lift, stand and shelf levels, is adaptable with respect to the design or arrangement of the two independent volumes characteristic of this system such as the reception area or stand (15) and the area for storage of the towers (3) or store (1) with the store arranged laterally (1), raised or underground (Fig. 13) with optionally from one to four direct accesses or stands (15) both in the reception area (Fig. 12) and in the store (Fig. 19), and the fixed lift can directly attend up to four vehicle stands (15) and four adjacent towers.

18. Modular storage system with mobile shelves, especially applicable to vehicle parking, according to the 1^{st}, 4^{th} and 5^{th} claims, in the fixed lift application with cross or transferal system (18), a special feature of this design is that the loads or vehicles situated in the fixed towers (148), between the two origins of coordinates (25) possible in the two modules (2) aligned with the service lanes (27), preferably operating as fixed or non-mobile towers or shelves which are moved according to a different series of operations to those used for towers situated at the grid references (24) within the X,Y system of coordinates corresponding to the origin (25) of each module, this system differs in that these loads or spaces in the towers lateral to the fixed lift (9) are preferably accessed by activating the lateral transferal system (19) or along the width of the tower (149), and for the indirect towers by the combined operation of both transferal systems (19) prior to removal of the space from the direct level to the summoned indirect level in the row (31), whereas the towers in front of or to the side (148) of the lift do not move except for in the case of breakdown in which they must permit the passage of another tower or be transferred to another module.

19. Modular storage system with mobile shelves, especially applicable to vehicle parking according to the 1^{st}, 4^{th} and 5^{th} claims in the fixed lift application (9), one special feature of this system is that it can optionally feature one (17) or two superimposed levels with their corresponding transferal devices (17) and (18) in both directions of transferal and operation of the tower levels (20), coinciding with the shelf levels (6) or towers that are arranged on each side of the lift in (25), permitting the simultaneous transferal of either one or two vehicles from either one of two of the lift levels (9) to one or two adjacent levels (6) of the same tower (3) or shelf or one or two towers situated at the origin of coordinates (25) of each module (2) that attend the fixed lift, to the interior of the lift.

20. Modular storage system with mobile shelves, especially applicable to vehicle parking according to the 1^{st}, 8^{th}, 12^{th}, 13^{th}, 14^{th}, 15^{th} and 19^{th} claims in the fixed lift application, these are characterized by the set of shelves or structure (3) with superimposed levels that comprise the parking spaces (4), these towers are displaced using a powered trolley (8) that, introduced beneath the tower causes this to rise, making it mobile, it is then transferred from its fixed position in the store (24) to the position opposite the lift (25) for the admission and/or removal of one or more vehicles to/or from the fixed lift (9).

21. Modular storage system with mobile shelves, especially applicable to vehicle parking according to the 1^{st} and 20^{th} claims in the fixed lift application, these are characterized in the withdrawal or admission of one or more vehicles to or from the shelf (3) which is, preferably, carried out in the store (1) opposite the fixed lift in (25) of the corresponding module (2), except in the case of breakdown when this will occur via the adjacent module, this is carried out using the vehicle transferal device on the shelf level (6) in combination with the transferal device in each level of the lift from one of the four possible sides of the lift, preferably along the width of the vehicle (149) and only via the two largest sides of the lift (150) with vertical movement of the vehicle this is transferred to one of the stands (15) of one of the two, and even up to four possible direct sides opposite the lift, where the vehicle is collected or delivered, in the reverse operation, by the user.

22. Modular storage system with mobile shelves, especially applicable to vehicle parking according to the 1^{st} and 20^{th} and 21^{st} claims in the fixed lift application, a special feature of this system is that the tower opposite the lift is replaced by the summoned tower, the sequences of movement of the towers in the store, and, therefore, the corresponding powered trolley (8) which transports the tower, start at the grid reference opposite the fixed lift (25) where the powered trolley (8) receives the order of the "summoned tower", the trolley (8) is then programmed to returned the tower it is supporting from position (25) to its specific grid reference (24), either in a direct row of towers (30) or an indirect row of towers (31), in which case after it has deposited the tower in the indirect row it will place the direct tower back into position, it will then proceed to collect the summoned tower from (30) or (31) taking it to the starting position opposite the fixed lift (25).
